(19) Europäisches Patentamt
European Patent Office
Office européen des brevets

(11) **EP 1 885 576 B1**

(12) **EUROPEAN PATENT SPECIFICATION**

(45) Date of publication and mention
of the grant of the patent:
**05.10.2011 Bulletin 2011/40**

(21) Application number: **06733433.4**

(22) Date of filing: **03.04.2006**

(51) Int Cl.:
*B60K 31/00* (2006.01)　　　*F16H 61/02* (2006.01)
*B60W 10/06* (2006.01)　　　*B60W 30/14* (2006.01)

(86) International application number:
**PCT/SE2006/050054**

(87) International publication number:
**WO 2006/107267 (12.10.2006 Gazette 2006/41)**

(54) **CRUISE CONTROL FOR A MOTOR VEHICLE**

GESCHWINDIGKEITSREGELUNG FÜR EIN KRAFTFAHRZEUG

REGULATEUR DE VITESSE POUR VEHICULE A MOTEUR

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **04.04.2005　SE 0500735**

(43) Date of publication of application:
**13.02.2008　Bulletin 2008/07**

(73) Proprietor: **Scania CV AB (publ)**
**151 87 Södertälje (SE)**

(72) Inventors:
• **SANDBERG, Tony**
**S-645 44 Strängnäs (SE)**

• **WINGREN, Anna**
**S-151 32 Södertälje (SE)**

(74) Representative: **Sjögren Paulsson, Stina**
**Scania CV AB,**
**Patents,**
**UTY/Building 117**
**151 87 Södertälje (SE)**

(56) References cited:
**EP-A1- 1 302 357　　　DE-A1- 10 205 226
US-A1- 2004 068 359　　US-B1- 6 549 841
US-B1- 6 847 887**

## Description

### Technical field

The present invention generally relates to vehicles, such as trucks, and, in particular, to a cruise control method and system for such a vehicle, which provides for an economically efficient and environmental driving control of a vehicle. The invention also relates to a computer program, a computer program product and an electronic control unit.

### Background art

Many road vehicles are currently equipped with a cruise control system for keeping a substantially constant speed by automatically affecting an engine of the vehicle. The use of a cruise control function may reduce driver fatigue, improve comfort and reduce fuel consumption. A conventional truck used for transports consumes large volumes of diesel each year, as an average the truck travels about 150000 km per year. Accordingly, a small decrease of the fuel consumption entails significant economical savings for the owner of the truck, for example, the driver or the firm of haulage contractors. Besides the economical savings it is also of a great benefit for the environment.

When a vehicle is speed 's being maintained at a constant level by the cruise control system, the occurrence of, for example, a downhill slope or a descent may cause the vehicle to undesirably accelerate above the cruise control speed set by the driver even if the cruise control system stops the fuel supply to the engine. The vehicle therefore has to be braked for example through auxiliary brakes, such as a retarder. This is inefficient in an energy consumption point of view since energy is consumed when braking the vehicle.

However, US 20040068359 discloses a predictive cruise control system that utilizes information about upcoming terrain taken from a three dimensional map and the result from a planning algorithm to obtain range of velocity for the vehicle. In order to obtain information about the terrain, the system uses a three dimensional map and signals from a Global Positioning System (GPS) receiver for information regarding the current vehicle position and the route ahead of the vehicle the following four kilometres. The optimizing algorithm calculates the optimum velocity for the present road profile ahead of the vehicle with regard to the fuel consumption, the travelling time, and the range of velocity. The result is stored in a Look-up table. A new calculation is not initiated until the vehicle has passed a certain predetermined distance. As the vehicle proceeds, the optimizing calculations are performed iteratively in the vehicle for the next predetermined road distance as the same time as the vehicle is driven a present road distance in accordance with optimizing calculations performed during the previously travelled distance. Accordingly, this method requires a very large amount of computations, which, inter alia, entails a high degree of computer utilization on a continuous basis.

Consequently, there is a need of an improved cruise control system, which provides for an economically efficient and environmental driving control of a vehicle and at the same time being effective in a computational sense of meaning.

### Disclosure of the invention

Thus, an object of the present invention is to provide an improved method and a system for cruise control, which enables an economically efficient and environmental driving control of a vehicle.

Another object of the present invention is to provide a method and a system for cruise control that are effective in a computational sense of meaning.

These and other objects are achieved according to the present invention by providing a method, a system, a computer readable medium, an electronic control unit, and a computer program having the features defined in the independent claims. Different embodiments are defined in the dependent claims.

For the purpose of clarity, the terms "in front of" and "behind" are related to the travel direction of the truck, i.e. the term "in front of" refers to a point in front of another point seen from the truck and similarly the term "behind" refers to a point behind another point seen from the truck. That is, the point "in front" of another point along the route is reached first by the vehicle when travelling along the road.

According to a first aspect of the present invention, there is provided a method for controlling operation of a vehicle. The method is characterized by the steps of identifying, for a route to be driven, a set of points associated with each ascent and descent along the route ahead of the vehicle having angle of inclination values such that the vehicle velocity cannot be maintained at maximum driving torque during uphill driving of the respective identified ascents and, the vehicle velocity increases with no driving torque applied at downhill driving of the respective identified descents, the route being pre-stored in a road map, wherein each of the points is associated with at least one vehicle operation criterion; calculating the specific position of each of the points based on at least one of each of a set of vehicle parameters, vehicle operation parameters, and road route parameters of the road map; storing the calculated positions before driving the route; and obtaining present vehicle position in order to determine the current vehicle position relative the road map during driving the route; selecting a driving strategy instruction for the control of the vehicle for each distance between the positions of two consecutive points of each ascent and descent, based on the vehicle position, and controlling at least one engine operating parameter as a function of the driving strategy instruction between each of the consecutive points in order to control the vehicle operation such that the at least one vehicle operation criterion associated with respective point of each of the points is fulfilled.

According to a second aspect of the present invention, there is provided a system for controlling operation of a vehicle. The system is characterized by processing means arranged to calculate, for a route to be driven, the specific position for each of a set of points associated with each ascent and descent along the route ahead of the vehicle having angle of inclination values such that, the vehicle velocity cannot be maintained at maximum driving torque during uphill driving of the respective ascents and, the vehicle velocity will increase with no driving torque applied at downhill driving of the respective descents, the route being pre-stored in a road map stored in a storing means, wherein each of the points is associated with at least one vehicle operation criterion, based on at least one of each of a set of vehicle parameters, vehicle operation parameters, and road route parameters of the road map, the calculated positions being stored in the storing means before driving the route; and means for obtaining the present vehicle position; the processing means during driving the route being arranged to select a driving strategy instruction for the control of the vehicle for each distance between the positions of two consecutive points of each ascent and descent based on the vehicle position relative the road map, and to supply the driving strategy instruction for each of the distances to at least one vehicle controller that controls at least one engine operating parameter as a function thereof; wherein the vehicle operation according to the selected driving strategy between each of the consecutive points is controlled such that the at least one vehicle operation criterion associated with respective point of each of the points is fulfilled.

According to a third aspect of the present invention, there is provided a computer program for an electronic control unit of a vehicle for controlling operation of the vehicle. The program comprises program instructions, which when run on the electronic control unit, causes the electronic control unit to perform the steps of according to the first aspect.

According to a fourth aspect of the present invention, there is provided a computer program product comprising computer readable medium and a computer program according to the third aspect, wherein the computer program is stored on the computer readable medium.

According to a fifth aspect of the present invention, there is provided an electronic control unit of a vehicle. The unit includes a storage means comprising a computer program according to the third aspect.

Thus, the present invention is based on the idea of identifying points of descents and ascents along the route of the vehicle having a significant impact on the control of the vehicle and employing the most efficient strategy with respect to fuel consumption between consecutive points along the ascents of the route having an angle of inclination such that the vehicle is not able to maintain its velocity at maximum torque and along the descents of the route having an angle of inclination such that the vehicle velocity increases with no driving torque. All calculations are performed in advance, i.e. before the vehicle starts the trip along the route, and the driving strategies to be used for respective distance between consecutive points are determined and stored beforehand.

The employed driving strategies is accordingly based on the observations that, since a vehicle, such as a truck, increases its velocity when running on a downhill slope due to its weight, it should be optimal, from a fuel consumption point of view, to apply a low velocity in the beginning of the slope. If the vehicle reaches the end of the downhill slope with a too high velocity, the driver is forced to brake the vehicle, which leads to a loss of energy. Consequently, the most efficient driving strategy would therefore be that the vehicle reaches the start of the downhill slope with a velocity being low enough so that neither a driving torque nor a braking torque is required for the vehicle to have its maximum velocity at the end of the slope. Moreover, the most efficient strategy for uphill slopes should be to apply a high velocity in the beginning of the slopes and only at the end of the slopes lower the velocity.

Further objects and advantages of the present invention will be discussed below by means of exemplifying embodiments.

**Brief description of the drawings**

Embodiments of the invention will now be described in greater detail with reference to the accompanying drawings, in which

Fig. 1 schematically shows an exemplary part of a vehicle internal computer system in which a cruise control system according to the present invention is installed.

Fig. 2 shows the general principles of the method according to the present invention.

Fig. 3 schematically shows the points of interest of a descent.

Fig. 4 schematically shows the points of interest of an ascent.

Fig. 5 schematically shows an example of a control of the vehicle when the vehicle is at an end of a descent and thereafter will approach an ascent.

Fig. 6 schematically shows an example of a control of the vehicle when the vehicle is at a start of an ascent and thereafter will approach a descent.

Fig. 7 schematically shows an example of a control of the vehicle when the vehicle is at an end of a descent and thereafter will approach another descent.

Fig. 8 schematically shows an example of a control of the vehicle when the vehicle is at a start of an ascent and thereafter will approach another ascent.

Fig. 9 is a flow chart illustrating the steps performed by the method for controlling a vehicle according to an embodiment of the present invention.

Fig. 10 is a flow chart illustrating the steps performed by the handle point C start routine of the method for controlling a vehicle according to the embodiment of the present invention shown in Fig. 9.

Fig. 11 is a flow chart illustrating the steps performed by the regular drive operation routine of the method for controlling a vehicle according to the embodiment of the present invention shown in Fig. 9.

Fig. 12 is a flow chart illustrating further steps performed by the method for controlling a vehicle according to the embodiment of the present invention shown in Fig. 9.

Fig. 13 is a flow chart illustrating further steps performed by the method for controlling a vehicle according to the embodiment of the present invention shown in Fig. 9.

Fig. 14 is a flow chart illustrating the steps performed by the handle point C routine of the method for controlling a vehicle according to the embodiment of the present invention shown in Fig. 9.

Fig. 15 is a flow chart illustrating further steps performed by the handle point C routine of the method for controlling a vehicle according to the embodiment of the present invention shown in Fig. 9.

Fig. 16 is a flow chart illustrating further steps performed by the method for controlling a vehicle according to the embodiment of the present invention shown in Fig. 9.

Fig. 17 is a flow chart illustrating the steps performed by the last ascent routine of the method for controlling a vehicle according to the embodiment of the present invention shown in Fig. 9.

**Mode(s) for carrying out the invention**

While the invention covers various modifications and alternative constructions, some embodiments of the invention are shown in the drawings and will hereinafter be described in detail. However, it is to be understood that the specific description and the drawings are not intended to limit the invention to the specific forms disclosed.

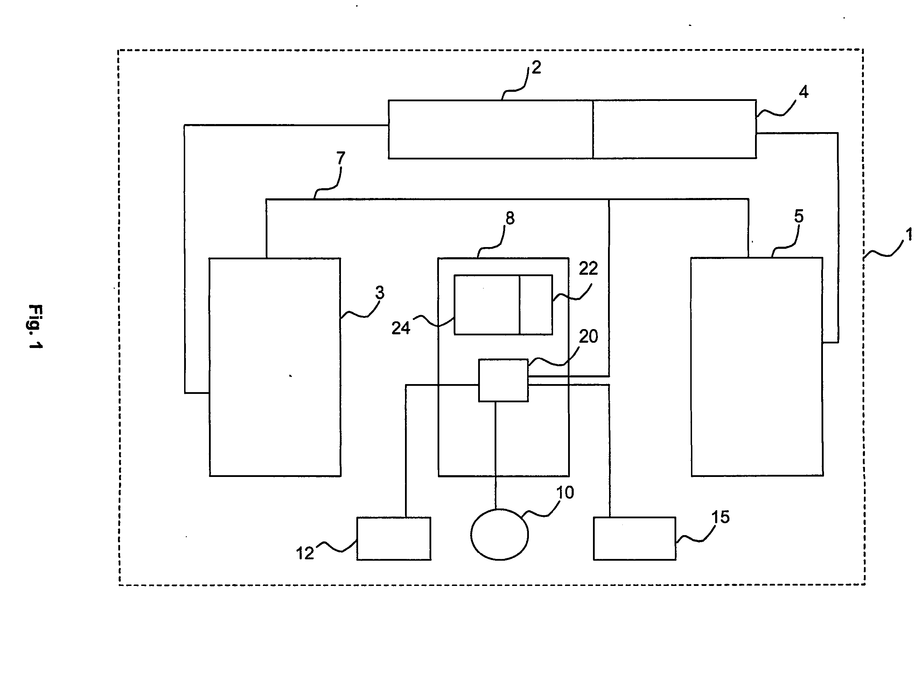

With reference first to Fig. 1, an exemplary part of a vehicle internal computer system in which a cruise control system according to the present invention is installed will be discussed.

According to one embodiment of the present invention, the inventive cruise control system is implemented in a communication network of a vehicle, such as a truck. In Fig. 1, a typical drive train for a heavy vehicle 1, such as a truck or a bus is shown. An engine 2 is controlled by a first ECU (electronic control unit) 3 in the form of an engine control unit and a gearbox 4 is controlled by a second ECU 5 in the form of a gearbox control unit. The gearbox control unit and the engine control unit are able to communicate with each other through a vehicle internal network bus 7, such as a bus adapted for a CAN (Controller Area Network), TTCAN (Time Triggered CAN), or FlexRay, but it should be noted that the invention can be implemented in other types of networks, for example networks using serial protocols such as RS232 or Ethernet. A third ECU 8 in the form of a cruise control unit is also connected to the vehicle internal network bus 7, which allows communication with both the engine control unit and the gearbox control unit as well as other ECUs connected to the vehicle internal network bus 7. The cruise control unit 8 comprises a conventional cruise control function arranged for keeping a substantially constant vehicle speed by automatically affecting the engine 2 of the vehicle 1 according to known functions of a state of the art conventional cruise control system and also comprises the inventive look-ahead cruise control function. The cruise control unit 8 comprises a processor 20 to which first storing means 22 is connected. The look-ahead cruise control function can alternately be stored in a specified location in either a Scania Coordinator module (not shown) or in the engine control unit 3. The Scania Coordinator (Coo) (not shown) is an electronic module or ECU on the CAN between the engine and other electronic modules or ECU's, which among other things transfers data from the driver controls to a system, e.g. the retarder, and to the instrument cluster for displaying vehicle data, such as for example showing oil pressure. The Scania Coordinator functions as a router of data signals.

Furthermore, at least one vehicle speed sensor 10 positioned as a wheel speed sensor and/or an engine speed sensor, a positioning system receiver 12 such as a GLONASS (Global Orbiting Navigation Satellite System) or GPS (Global Positioning System) receiver for supplying information regarding the current position of the vehicle, inputting means 15 in the form of a key panel and/or data reading means such as reading means for a CD or floppy disc are connected to the cruise control unit 8. By means of the inputting means 15 information regarding, for example, the road route of the vehicle, road gradient information, etc. can be inputted to the cruise control unit.

The inventive look-ahead cruise control function is arranged to identify a set of points of certain important ascents and descents respectively along the whole route ahead of the vehicle having angle of inclination values such that, the vehicle velocity cannot be maintained at maximum driving torque during uphill driving of the respective identified ascents and, the vehicle velocity increases with no driving torque applied at downhill driving of the respective identified descents, the route being pre-stored in a road map, wherein each point is associated with at least one vehicle operation criterion; calculate the specific position of each of the points based on at least one of a plurality of vehicle parameters, vehicle operation parameters, and road route parameters; select at least one driving strategy instruction for the control of the vehicle for each distance between the calculated positions for two consecutive points of each of the identified ascents and descents , and control at least one engine operating parameter as a function of the at least one driving strategy instruction between each of the consecutive points in order to control the vehicle operation such that the at least one vehicle operation criterion associated with respective point of each of the points is fulfilled. That is, the look-ahead cruise control function determines and pre-stores the driving scheme for the vehicle, i.e. the driving strategy for each distance between consecutive pre-calculated points, and by using the present vehicle position as obtained by means of the positioning system to the receiver 12, and vehicle speed as obtained by means of the speed sensor 10, the look-ahead cruise control function is able to localize the vehicle position in relation to the road map and, thereby, to send the appropriate control instructions to the engine control unit 3 upon arriving at the pre-calculated points, corresponding to the identified important ascents and descents having high angles of inclination, i.e. certain steeper uphill and downhill slopes, when the vehicle is actually driven along the route, for achieving a driving control for these ascents and descents which is effective in a fuel consumption reduction point of view.

An ascent and descent is in this context respectively determined important when having an angle of inclination to the horizontal plane such that, the vehicle velocity cannot be maintained at maximum driving torque during uphill driving of such an ascent and, the vehicle velocity increases with no driving torque applied at downhill driving of such a descent. The inventive look-ahead cruise control function thus aims at identifying points of interest of all the so-called important ascents and descents, i.e. steep uphill and downhill slopes, only along a route to be travelled and does not consider, for example, gently sloping ascents or descents along the same route where the conventional cruise control can maintain the set vehicle speed without difficulty.

In this embodiment, storing means 22 or computer readable medium comprises a random access memory (RAM) (not shown) in addition to various non-volatile memories such as read-only memory (ROM) (not shown) and keep-alive memory (KAM) (not shown). In this embodiment, the read-only memory comprises a computer program 24 comprising instructions for bringing a computer to perform method steps in accordance with the present invention. Computer readable medium 22 communicates with processor 20 via a standard control/address bus (not shown). As will be appreciated by one of ordinary skill in the art, computer readable storage media may comprise various types of physical devices for temporary and/or persistent storage of data which comprises solid state, magnetic, optical and combination devices. For example, the computer readable storage media may be implemented using one or more physical devices such as a hard-drive, DRAM, PROMS, EPROMS, EEPROMS, flash memory, and the like. Depending upon the particular application, the computer readable storage media may also comprise floppy disks, CD ROM, and the like. Furthermore, the cruise control unit 8 is arranged to send vehicle control parameters, i.e. driving strategy instructions, to the vehicle controllers, i.e. the control units 3 and 5, which control different operating parameters of the engine 2 as a function of the instructions. For example, the cruise control unit may supply the engine control unit and gearbox control unit 3 and 5, respectively, with control parameters instructing them to set the velocity of the vehicle to a reference velocity, for example, 80 km/h, or to set the torque of the engine to the maximum torque. Consequently, the cruise control unit 8 provides instructions for controlling the vehicle according to a specific driving strategy.

The basic principles of the method for controlling a vehicle is the following: identifying a set of points of each steeper ascent and descent along the route of the vehicle, as such having angle of inclination values such that, the vehicle velocity cannot be maintained at maximum driving torque during uphill driving of the respective identified steeper ascents and, the vehicle velocity increases with no driving torque applied at downhill driving of the respective identified steeper descents, the route being stored in a road map, wherein each point is associated with at least one vehicle operation criterion; calculating the specific position of each of the points based on at least one of each of a set of vehicle parameters, vehicle operation parameters, and road route parameters; selecting at least one driving strategy instruction for the control of the vehicle for each distance between the calculated positions for two consecutive points of each of the ascent and descent, and controlling at least one engine operating parameter as a function of the at least one driving strategy instruction between each of the consecutive points in order to control the vehicle operation such that the at least one vehicle operation criterion associated with respective point of each of the points is fulfilled based on vehicle position in relation to the road map and vehicle speed. Thus, the geographical positions and associated driving strategies are calculated and stored in advance, i.e. before the vehicle commences travelling along the route. The position and associated driving strategy data are for example stored in look-up tables or the like data storage registers in the control unit 8 storing means 22, or in a corresponding storing means associated with the Coordinator unit or the engine ECU 3.

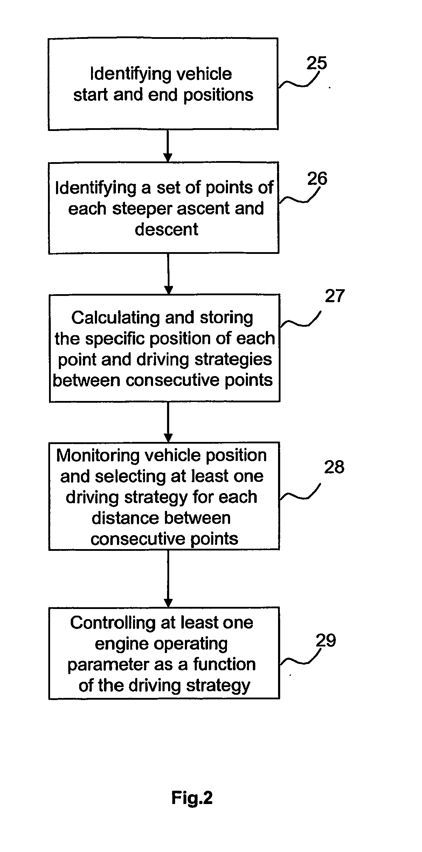

Referring now to Fig. 2, the general principles of the method according to the present invention will be described. First, at step 25, the route and thus vehicle start and end positions are determined, for example the respective start and destination geographical coordinates. The route is stored in a road map, which in turn, is stored in the storage means 20. Then, at step 26, a set of points of the respective important, i.e. steeper, ascents and descents along the travelling route ahead of the vehicle, each point being associated with at least one vehicle operation criterion, are identified between the start and end positions. Then, at step 27, the specific position of each of said points based on at least one of each of a set of vehicle parameters, vehicle operation parameters including at least the vehicle speed, and road route parameters are calculated and stored together with a driving strategy instruction determined for the control of the vehicle for each distance between the calculated positions for two consecutive points of each important ascent and descent. Thereafter, at step 28, the vehicle position in relation to the road map is continuously monitored during actual driving of the vehicle along the route and a driving strategy instruction for the control of the vehicle for each distance between the calculated positions for two consecutive points of each steeper ascent and descent is selected from storage based on the vehicle position relative the road map. The present vehicle position is determined by means of, for example, positioning signals received in the receiver 12, such as a GPS or GLONASS receiver, vehicle speed and route data of said road map. Finally, at step 29, at least one engine operating parameter is controlled based on the vehicle position as a function of the driving strategy instruction between each of the consecutive points in order to control the vehicle operation such that said at least one vehicle operation criterion associated with respective point of each of said points is fulfilled.

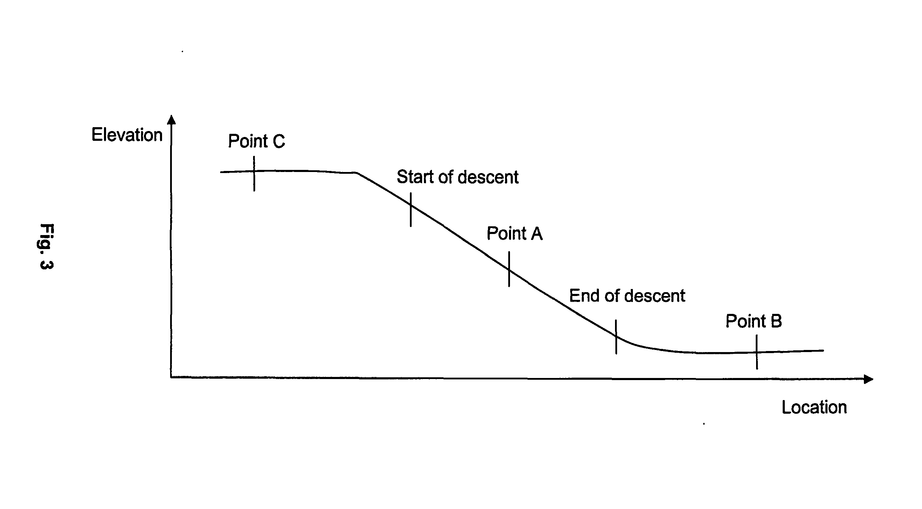

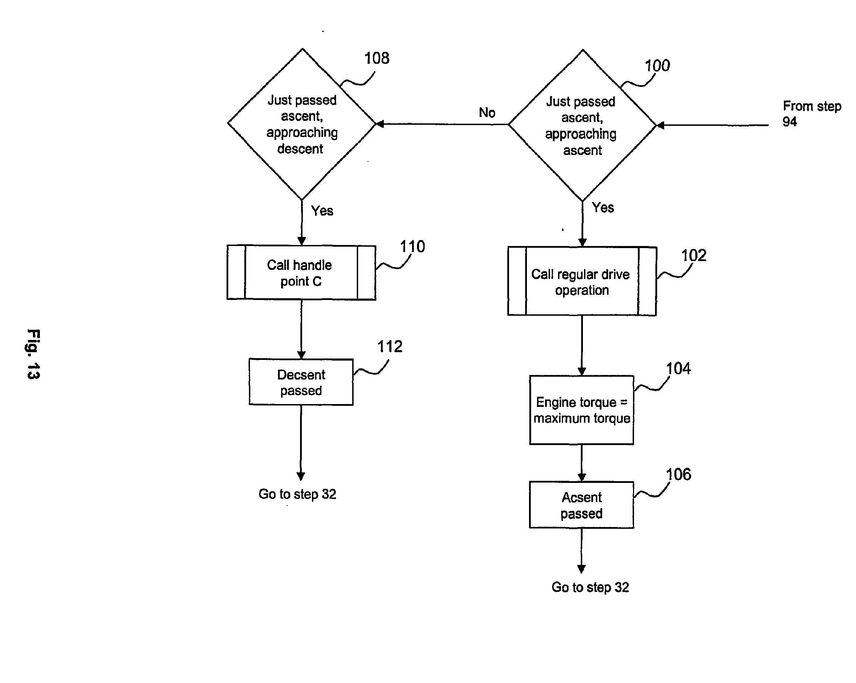

Hereinafter, an embodiment of the method according to the present invention will be discussed in more detail with reference to Figs. 3-17.

Referring first to Fig. 3, the points of interest of an important descent or downhill slope will be discussed. A truck increases the speed on downhill runs without gas due to its weight. In a fuel consumption reduction point of view it has therefore been found that it is efficient to have a relatively low velocity in the start or beginning of such a descent. If the vehicle reaches the start of the descent with a high velocity the driver will be forced to brake, which, in turn, entails that energy will be lost. Accordingly, the most efficient driving strategy in a fuel consumption reduction point of view should therefore be that the truck reaches such descents at such a low velocity that no driving or braking torque, or at least only a minimum of braking torque, is needed in order to let the truck have its maximum allowed velocity at the end of the descent. In order to control a truck according to the above mentioned scheme, the following points, see also Fig. 3, was found to be of a special interest:

Start of descent: The point where the truck will maintain its reference velocity $v_{ref}$ substantially without throttle action or brake action.

End of descent: The point where the truck again will maintain its maximum velocity $v_{max}$ substantially without throttle action or brake action.

Point A: The position that entails that the truck will reach its maximum velocity $v_{max}$ at End of descent substantially without throttle action or brake action. At calculations the truck is assumed to have a reference velocity $v_{ref}$ at point A.

Point B: The point where the velocity of the truck again will be $v_{ref}$ if the velocity at End of descent was $v_{max}$ and substantially no driving or braking torque was used.

Point B+: The point where the velocity of the truck again will be $v_{ref}$ if the velocity at End of descent was $v_{max}$ and a small driving torque, i.e. 40 Nm, was used.

Point C: The point that entails that the truck will reach point A with the velocity $v_{ref}$ if no driving torque was used starting at point C and the same time as the velocity does not go below the lowest permitted velocity $v_{min}$.

Thus, the basic idea is that no driving torque should be applied on the truck from point C until point B. The maximum velocity of the truck is obtained at End of descent and at point B the velocity is $v_{ref}$ again. However, it has been shown that the fuel consumption can be lowered if the engine torque between End of the descent and the position where the velocity again is $v_{ref}$ is, for example, set to about 40 Nm. The point where the vehicle again has the velocity $v_{ref}$ is then denoted as point B+.

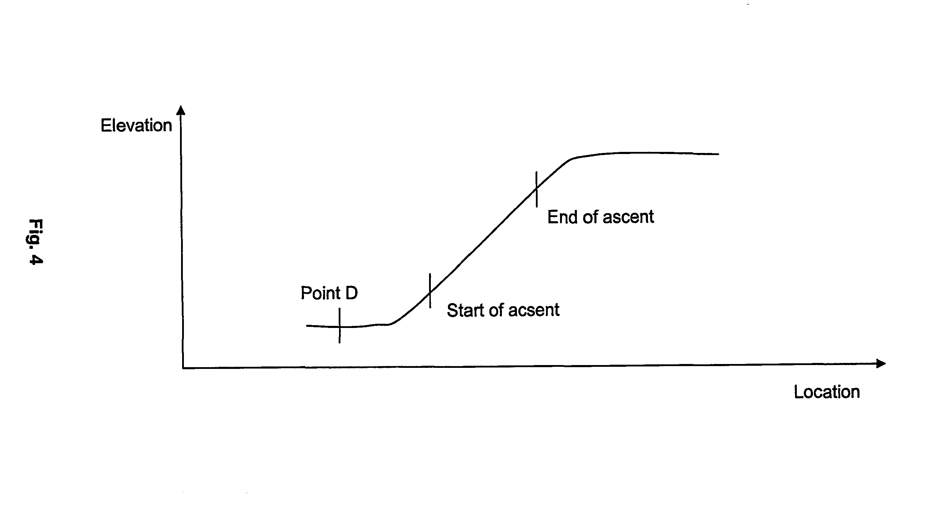

Turning now to Fig. 4, the points of interest of an important ascent, i.e. uphill slope, will be discussed. It has been found that it is efficient to have a high velocity at the beginning of an important ascent and a reduced velocity at the end of the ascent. In order to control a truck according to the above mentioned scheme, the following points, see also Fig. 4, has been found to be of a special interest:

Point D: The point that entails that, if the truck is driven at maximum torque from point D to Start of ascent, the velocity of the truck will be $min(x, v_{max})$ at Start of ascent if the velocity at point D was $v_{ref}$, where x is a predetermined velocity.

Start of ascent: The point where the truck will maintain substantially $min(x, v_{max})$ at maximum torque.

End of ascent: The point where the truck again is capable of maintaining a velocity of $min(x, v_{max})$ at maximum torque.

$v_{ref}$ is the velocity of the truck at "normal" circumstances as set in the conventional cruise control, for example, at substantially flat portions of the route and $v_{max}$ is the maximal velocity of the truck allowed by the driver on the one hand in the simulation drive for calculating the points of interest of important ascents and descents and on the other hand for setting the speed value for operating an automatic braking function during the actual driving of the route. $V_{min}$ is the lowest vehicle velocity permitted by the driver in order to drive the vehicle in a fuel economical way.

Thus, the basic idea is that the truck is accelerated maximally from point D until Start of ascent such that the velocity of the truck at Start of ascent is the minimum velocity of a predetermined velocity x and $v_{max}$, i.e. $min(x, v_{max})$. In one embodiment, this predetermined velocity is 89 km/h. Thereafter, the truck is controlled by the control signals from the conventional cruise control, which is set to control the truck at a velocity of min (89, $v_{max}$) between Start of ascent and End of ascent.

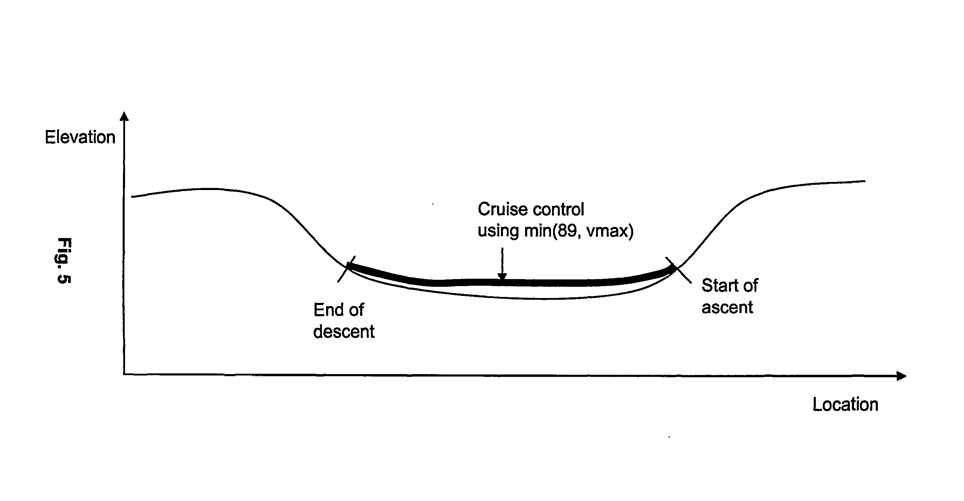

The procedure for calculating the above-mentioned points in advance, i.e. before the vehicle starts the trip, will now be discussed with reference to Figs. 5, 6 and 7, 8, respectively.

Start of descent, End of ascent, Start of descent, End of descent, point A, point B+, point D and two vectors for point C, which depends on velocity can be calculated before the driving of the route is initiated if information regarding the gradient of the road is available. The respective positions of these points depend on the vehicle velocity, the weight of the vehicle, the power of the engine and the gearing.

The gradient required for a truck to maintain its velocity on a descent when the torque of the engine is the drag torque and the weight of the truck is 40 tons is shown in the table 1 below. The values have been calculated by means of a drive simulation program and are vehicle parameter dependent, i.e. they will vary with differently dimensioned power trains, engines etc.. It should thus be noted that these values are only exemplifying.

**Table 1**

| Velocity [km/h] | Gradient [radians] |
|---|---|
| 80 | -0.01334 |
| 83 | -0.01376 |
| 85 | -0.01405 |
| 86 | -0.01420 |
| 87 | -0.01435 |
| 88 | -0.01450 |
| 89 | -0.01466 |
| 90 | -0.01480 |

The gradient used is the gradient $a_{desunt}$ which corresponds to the velocity of $0.5(v_{ref}+v_{max})$. The point where the actual gradient turns from being larger than $\alpha_{descent}$ to being less than $\alpha_{descent}$ corresponds to Start of descent and the point where the actual gradient turns from being less than $\alpha_{descent}$ to being larger than $\alpha_{descent}$ corresponds to End of descent.

The procedure for calculating Start of ascent and End of ascent is similar to that of determining Start of descent and End of descent. By simulations, the steepest possible ascent where the truck is able to maintain its velocity at a maximum torque is found. The values from the simulations are vehicle parameter dependent, i.e. they will vary with differently dimensioned power trains, engines etc., and are shown in table 2 below. It should thus be noted that these values are only exemplifying.

**Table 2**

| Velocity [km/h] | Gradient [radians] |
|---|---|
| 85 | 0.01757 |
| 86 | 0.01739 |
| 87 | 0.01717 |
| 88 | 0.01694 |
| 89 | 0.01668 |

The gradient $\alpha_{ascent}$ that is used is the gradient that corresponds to the velocity min(89, $v_{max}$). The Start of ascent is the point where the actual gradient shifts from being less than $\alpha_{ascent}$ to being larger than $\alpha_{ascent}$ and End of ascent is the point where the gradient shifts from being larger than $\alpha_{ascent}$ to being less than $\alpha_{ascent}$.

In order to calculate point A, the following equation for calculating the start velocity $x_{2,k-1}$, if the calculated velocity in step k is $x_{2,k}$ and the torque that was used to reach the velocity was $M_k$.

$$x_{2,k-1} = \sqrt{\left(\frac{C_2\cos(\alpha_k)\cdot S - x_{2,k}}{2\cdot S\cdot[C_1 + C_c\cos(\alpha_k)] + 2}\right)^2 - \left(\frac{C_M\cdot(M_{M,k} - M_{ha}) + C_3\cos(\alpha_k) + C_S\sin(\alpha_k)\cdot S}{S\cdot[C_1 + C_c\cos(\alpha_k)] + 1}\right)} - \left(\frac{C_2\cos(\alpha_k)\cdot S - x_{2,k}}{2\cdot S\cdot[C_1 + C_c\cos(\alpha_k)] + 2}\right)$$

**(eq. 1)**

In order to calculate at which position $x_{1,k-1}$, the velocity is $x_{2,k-1}$, the following equation is used:

$$x_{1,k-1} = x_{1,k} - S$$

**(eq. 2).**

[0072] , where S is the step length between two successive steps, for example, 0.01.

Where,

$$C_1 = -\frac{3.6\cdot3600}{m}\cdot\frac{0.5\cdot c_w A_a \rho_a}{3.6^2}$$

$$C_c = -\frac{3.6\cdot3600}{m}\cdot Ca\cdot m\cdot\frac{flatCorr}{1000}\cdot g$$

$$C_2 = -\frac{3.6\cdot3600}{m}\cdot Cb\cdot m\cdot\frac{flatCorr}{1000}\, g$$

$$C_M = \frac{3.6\cdot3600}{m}\,\frac{i_f n_f i_t n_t}{r_w}$$

$$C_3 = \frac{3.6\cdot3600}{m}\cdot\frac{flatCorr}{1000}\cdot g\cdot$$

$$\cdot[(Ca\cdot80^2 + Cb\cdot80)\cdot m - C_{risoFront}m_{front} - C_{risoRear}m_{rear} - C_{risoSemi}m_{semi}]$$

$$-\frac{3.6\cdot3600}{m}\cdot\frac{m\cdot g\cdot\mu\cdot d}{2}$$

$C_w$ = the coefficient of air resistance, $A_a$ = the maximum cross-section of the vehicle, $\rho_a$ = the density of air, m = the total mass of the truck, Ca and Cb are constants related to the roll-resistance of the tyres,

$$flatCorr = \frac{1}{\sqrt{1 + \dfrac{r_w}{2.7}}}$$

**[0077]** , where $r_w$ is the radius of the wheels, $n_f$ = gear ratio of the final gear, it = the gear ratio of the gear box, $n_t$ = the efficiency of the gear box, $C_{risoFront}$, $C_{risosemi}$, $C_{risoRear}$ are constants related to the roll-resistance of the tyres, $\mu$ = inner friction of ball bearings, and d = inner diameter of ball bearings.

In the procedure for calculating point A, the end position is End of descent, the velocity is $v_{max}$ and the torque of the engine is the drag torque. By using equation 1 and 2, the velocity and position the truck had at the former calculation step if the drag torque was used is calculated. If the calculated velocity is higher than $v_{ref}$, the velocity and the position is calculated a further step backwards. This is repeated as long as the calculated velocity is higher than $v_{ref}$. In this case a check whether the calculated position is a point in front of Start of descent is performed. If yes, point A is set to Start of descent and the velocity at End of descent is calculated using equation 4, see below. The velocity at End of descent is used in calculating point B+.

In order to calculate point B+, equation 3 and equation 4, see below, is used.

$$x_{1,k+1} = x_{1,k} + S$$

(eq. 3)

It is calculated what the velocity a distance ahead of the vehicle will be when the latest calculated velocity is known and the torque of the engine is, for example, 40 Nm. The starting point in the calculation is set to End of descent and the velocity is set to the velocity at the End of the descent that was calculated when point A was calculated. Using equation 3 and equation 4, see below,

$$\begin{aligned} x_{2,k+1} = &\frac{S}{x_{2,k}}\left(C\, x_{2,k}^2 + C_{\iota}\cdot\cos(\alpha_k)x_{2,k}^2 + C_2\cos(\alpha_k)x_{2,k} + C_M(M_{m,k} - M_{ha}) + C_3\cos(\alpha_k)\right) \\ &+ \frac{S}{x_{2,k}}\left(C_3\sin(\alpha_k)\right) + x_{2,k} \end{aligned}$$

(eq. 4)

The next position, i.e. at step k+1, and the velocity at this position are calculated when the torque is set to 40 Nm. If the calculated velocity is higher than $v_{ref}$, the next position and the velocity at this position is calculated. As long as the above-mentioned condition applies the calculation will be repeated. When the condition is not satisfied, point B+ will be set to the last position calculated.

The position for point C depends on the velocity the vehicle has just in front of the descent. Since the truck has been driven by means of the conventional cruise control up to point C, the velocity of the truck is unknown for the equation. Therefore, two vectors which altogether contain information of what velocity is required at a given point for reaching a velocity of $v_{ref}$ at point A are calculated. In order to calculate these vectors, equations 1 and 2 are used. In the procedure, the end position is set to the position of point A and the end velocity is set to $v_{ref}$. The torque of the engine used is the drag torque. The preceding position and the velocity at this position is calculated by means of equations 1 and 2 and the engine torque is set to drag torque. If the velocity is higher than $v_{min}$ and lower than min(89, $v_{max}$), where $v_{min}$ is the lowest velocity the driver allows the truck to have, a further position and the velocity at this position is calculated. This will be repeated until the above-mentioned condition no longer applies. All calculated positions and velocities are stored in two vectors for later use in order to determine the position of point C. The number of points in the vectors depends on $v_{max}$, $v_{ref}$ and the road gradient.

In order to calculate point D, equations 1 and 2 are used again. First, the end velocity, i.e. the velocity at the Start of the ascent, is set to min(89, $v_{max}$) and the end position is set to Start of ascent. The torque of the engine used is the maximum torque of the engine. Thereafter, the last position, i.e. the preceding calculation step, and the velocity at this position is calculated by means of equations 1 and 2. If the velocity at the end position is higher than $v_{ref}$, the velocity and the position before the above-mentioned last position are calculated. This will be repeated until the above mentioned condition no longer applies. Then, point D is set to the latest calculated position.

When the positions for all points have been calculated, the actual driving of the route can be started. Which driving strategy to be used, i.e. selected from storage, depends on if the next slope is a descent or an ascent and whether the latest slope that the truck passed was a descent or an ascent. The basic idea for the driving strategy is shown with respect to Figs. 5, 6, 7, and 8 in a number of exemplifying road configurations. The Look-Ahead cruise control function operates as the master function of the cruise control system deciding how the vehicle, i.e. truck, is driven when put in cruise control mode. Depending on between which positions the truck is travelling the Look-Ahead cruise control will either activate the conventional cruise control function set on maintaining the velocity $v_{ref}$ or min(x,$v_{max}$) or control the engine through controlling engine torque. The conventional cruise control function is then deactivated through Look-Ahead cruise control instructions for vehicle operation control through engine torque control.

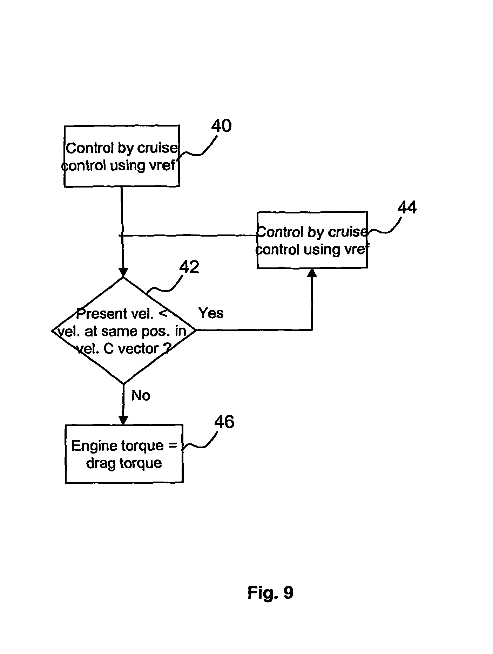

The cruise control function will however be described in more detail with reference to Figs. 9-17.

In Fig. 5, the driving strategy for the truck, when travelling from a descent to an ascent, is shown. As can be seen, the conventional cruise control is activated and uses the velocity min(89, $v_{max}$) between the points End of descent and Start of ascent. In other words, the cruise control unit 8 sends control instructions to the engine control unit 3 comprising information regarding the velocity to be used.

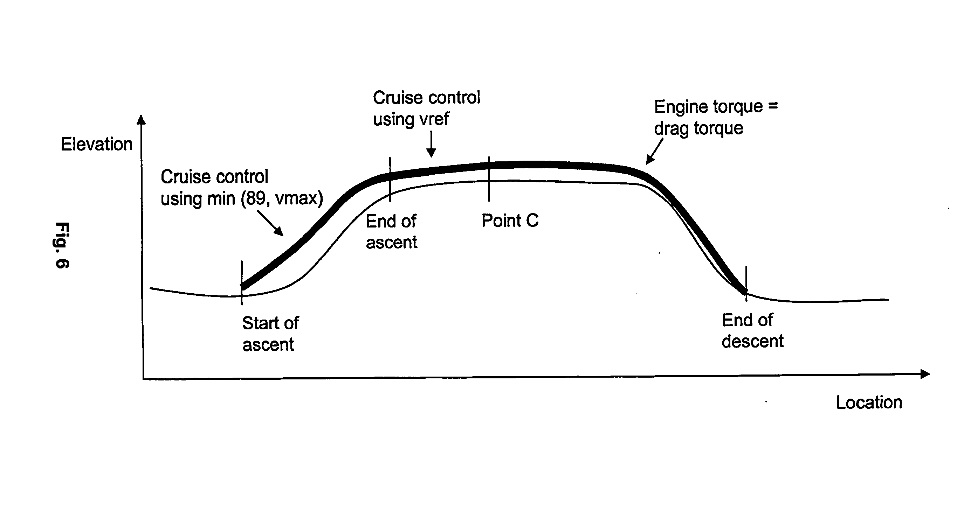

In Fig. 6, the driving strategy for the truck, when travelling from an ascent to a descent, is shown. As indicated, the conventional cruise control is activated and uses the velocity min(89, $v_{max}$) between the points Start of ascent and End of ascent and $v_{ref}$ between the point End of ascent and point C. Further, the conventional cruise control is deactivated between point C and End of descent and the torque of engine used is the drag torque. That is, the cruise control unit 8 sends control instructions to the engine control unit 3 comprising information regarding which velocity the vehicle should have and which engine torque to be used.

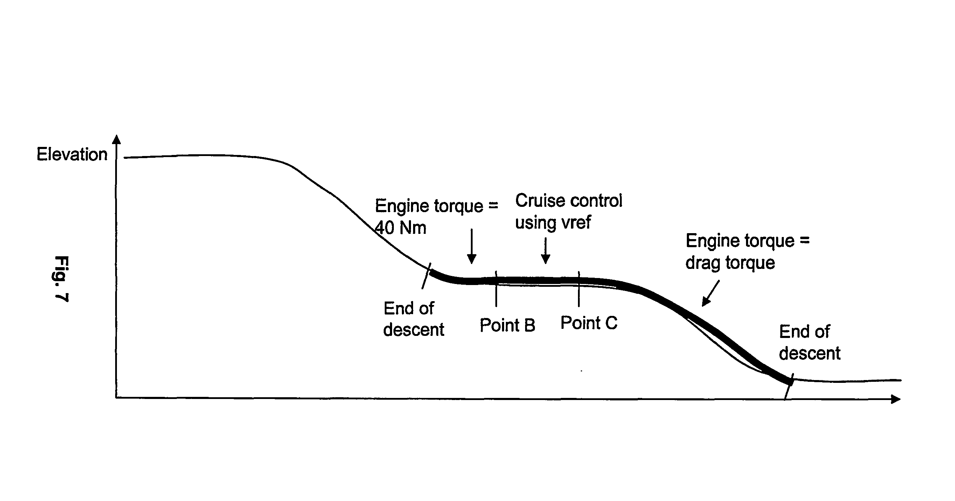

In Fig. 7, the driving strategy for the truck, when travelling from a first descent to a second descent, is shown. As can be seen, the torque of the engine is set to a preset value, in this example, 40 Nm between End of descent point of the first descent and point B+ of the first descent, the conventional cruise control is activated between point B+ of the first descent and point C of the second descent and uses the velocity $v_{ref}$, and the conventional cruise control is deactivated between point C and End of descent of the second descent and the torque of engine used is the drag torque. Accordingly, the cruise control unit 8 sends control instructions to the engine control unit 3 comprising information regarding which velocity the vehicle should have and which engine torque to be used.

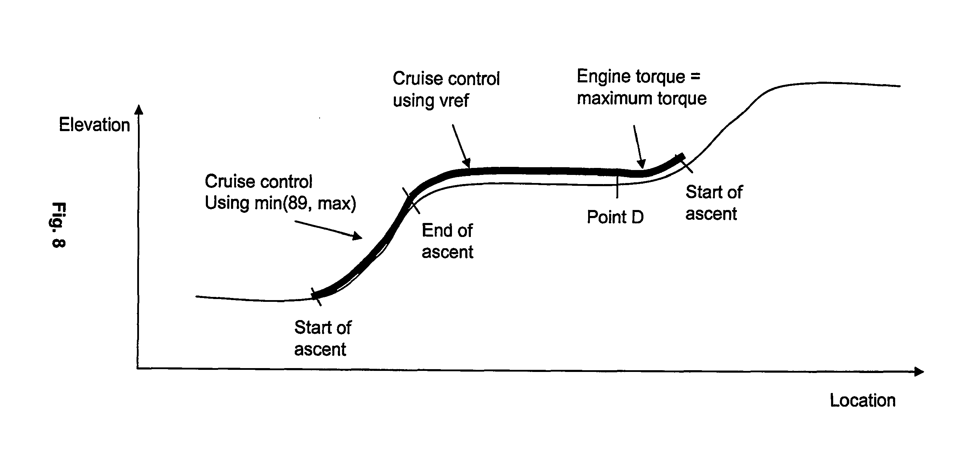

In Fig. 8, the driving strategy for the truck, when travelling from a first ascent to a second ascent, is shown. The cruise control unit 8 sends control instructions to the engine control unit 3 comprising information regarding which velocity the vehicle should have and which engine torque to be used. The conventional cruise control is activated and uses the velocity min(89, $v_{max}$) between the points Start of ascent and End of ascent of the first ascent, the conventional cruise control uses the velocity $v_{ref}$ between End of ascent of the first ascent and point D of the second ascent, and the conventional cruise control is deactivated between point D and Start of the ascent of the second ascent and the torque of the engine is set to the maximum torque.

When all the points relating to important, i.e. steeper, ascents and descents along the route ahead have been determined according to above-mentioned procedure, the vehicle is ready to begin the trip along the route. By continuously obtaining the present vehicle position when driving along the route, the cruise control unit 8 is then able to collect the appropriate driving strategy from storage and to control the engine control unit 3 according to the strategy to, in turn, control the engine 2.

Turning now to Figs. 9-17, an embodiment of the look-ahead cruise control function according to the present invention will now be described in detail.

According to the innovative cruise control function, when the vehicle has started the trip along the route, the cruise control unit 8 applies, by obtaining the present vehicle position in relation to the road map, the appropriate driving strategy.

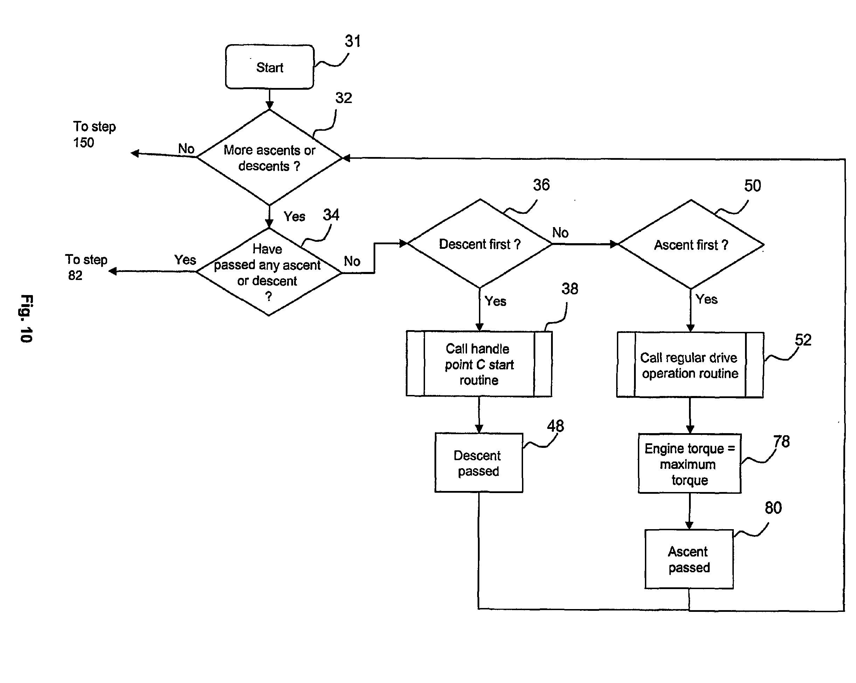

With reference first to Fig. 9, the procedure for determining the driving scheme to be applied for the route is initiated at step 31. According to one embodiment, the driver is able to select $v_{max}$, $v_{min}$, and $v_{ref}$ by means of the inputting means 15. The selected values can, for example, be stored in storing means of the engine control unit 3 or in another control unit, and the values can be communicated to the cruise control unit 8 by means of the CAN bus of the vehicle. Then, at step 32, it is checked whether there are any important, i.e. steeper, descents or ascents along the route by using road map data inputted by means of the inputting device 15. If yes, it is checked, at step 34, whether any descents or ascents have been passed. If no, the algorithm proceeds to step 36 where it is checked whether the first slope is a descents. If the first slope is a descent, a sub-routine handle point C start is called at step 38, which is described with reference to Fig. 10. This routine operates as follows. At step 40, the vehicle is controlled by the conventional cruise control at the velocity $v_{ref}$ from the start of the route until the first possible position of point C of the first descent. Next, at step 42, a comparison procedure is performed in the processor 20 between the present velocity and the calculated velocity, i.e. it is checked whether the present velocity is lower than the calculated velocity at the corresponding position in the velocity vector for point C stored in the storing means 22. If yes, the algorithm maintains the velocity at $v_{ref}$ at step 44. If no, i.e. the present velocity is higher than the calculated velocity at the corresponding position in the velocity vector for point C, the algorithm proceeds to step 46 where the engine torque is set to the drag torque from point C until End of descent. Then, at step 48, it is determined that the descent has been passed and the algorithm returns to step 32.

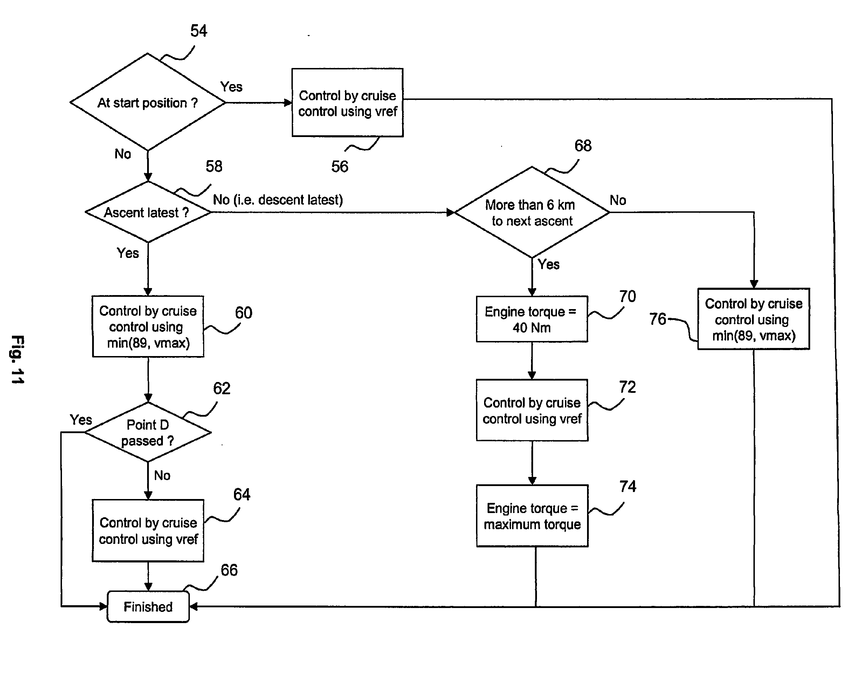

On the other hand, if it is determined that the first slope is an ascent at step 50, a regular drive operation routine is called at step 52, which is described with reference to Fig. 11. This routine operates as follows. First, at step 54, it is checked whether the truck is at the starting position, i.e. at the start of the route. If yes, the algorithm proceeds to step 56, where the vehicle is controlled by the conventional cruise control at the velocity $v_{ref}$ from starting position to point D. If the vehicle is not at the starting position, it is checked, at step 58, whether the latest slope was an ascent. If yes, the algorithm proceeds to step 60 where the vehicle is controlled by the conventional cruise control at the velocity min(89, $v_{max}$) from start of ascent to end of ascent. Then, at step 62, it is checked whether point D has been passed. If yes, the algorithm proceeds to step 66 where it is finished. If no, i.e. if point D not has been passed, the algorithm proceeds to step 64 where the vehicle is controlled by the conventional cruise control at the velocity $v_{ref}$ from end of ascent to point D. If a descent was the latest passed slope, it is checked whether it is 6 km or more to the next ascent at step 68. This distance of 6 km is only exemplary and is of course adjustable as the skilled man realizes. If it is determined that it is more than 6 km to the next ascent, the algorithm proceeds to step 70, where the torque of the engine is set to a predetermined value, in this embodiment 40 Nm, from End of descent to point B+. When the truck reaches point B+, the conventional cruise control is activated, at step 72, and the velocity is set to $v_{ref}$ from point B+ to point D of the next ascent. Then, at step 74, when the truck reaches point D, the torque of the engine is set to maximum torque from point D to Start of ascent. When the truck reaches Start of ascent point, the algorithm proceeds to step 66. On the other hand, if, at step 68, it was determined that it was less than 6 km to the next ascent, the algorithm proceeds to step 76 where the conventional cruise control is activated and the velocity is set to min(89, $v_{max}$) from End of descent point to Start of ascent. Then, when the truck reaches the Start of ascent point, the algorithm proceeds to step 66.

When the regular drive operation routine is finished, i.e. when the truck has reached point D, the algorithm proceeds to step 78 where the engine torque is set to the maximum torque from point D to Start of ascent of the next ascent. Thereafter, after passing the ascent, at step 80, the algorithm returns to step 32, and the check whether there are any more ascents or descents along the route in front of the truck is resumed.

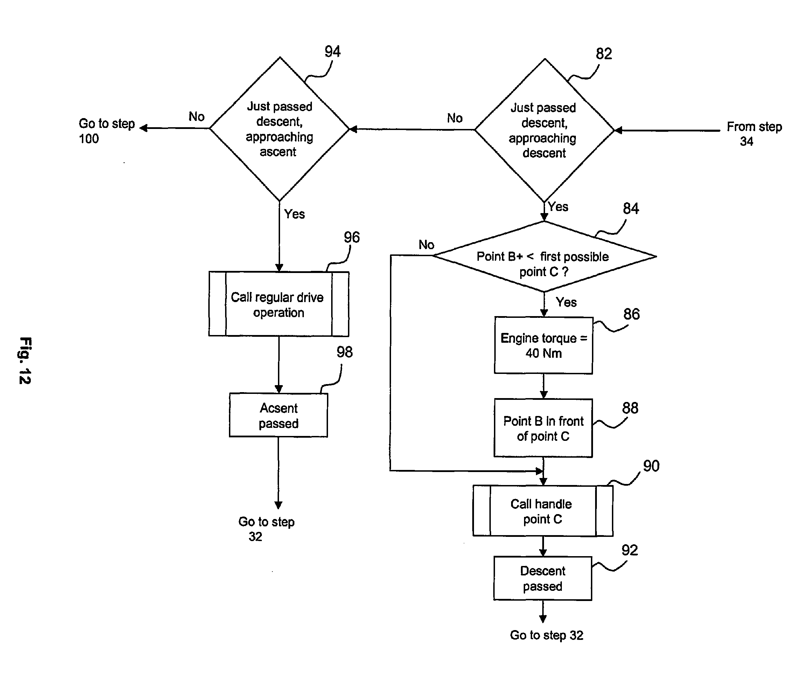

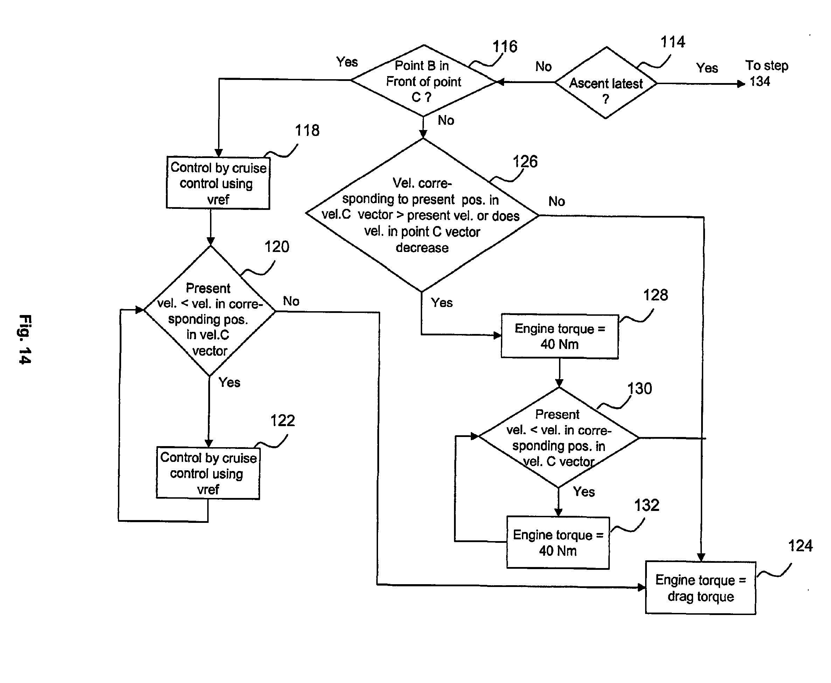

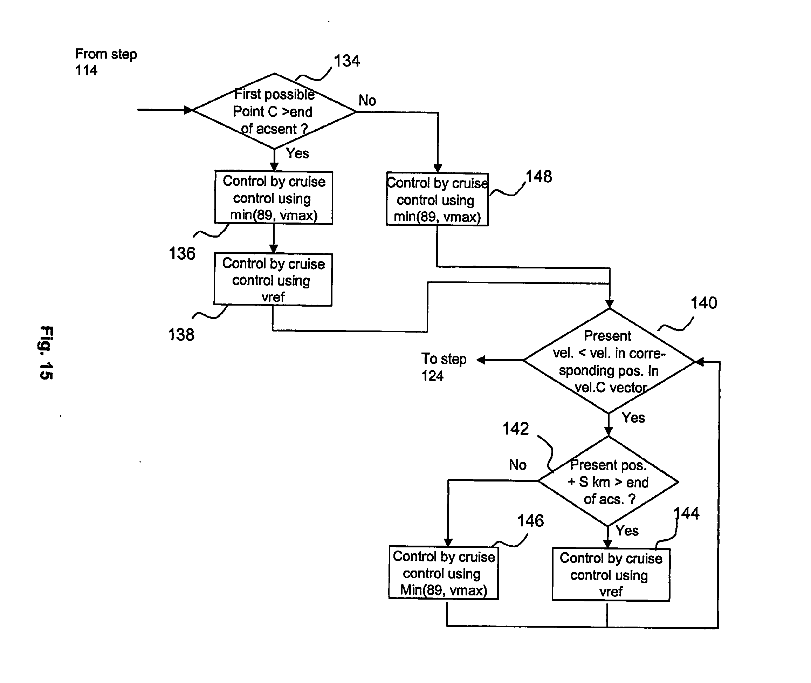

If, at step 34, it was verified that at least one descent and/or ascent had been passed by the truck, the algorithm proceeds to step 82, see Fig. 12, where it is checked whether a descent has been passed and a further descent is approaching. The situation where a truck just has passed a descent and approaches another descent is discussed above with reference to Fig. 7. If yes, it is checked at step 84 whether point B+ of the last descent is positioned in front (seen from the truck) of the first possible point C. If yes at step 84, the engine torque is set, at step 86, to a predetermined value , in this embodiment 40 Nm, from End of descent point to point B+. Then, at step 88, point B+ is determined as lying in front of or before point C. When the truck reaches point B+/End of descent, the algorithm proceeds to step 90, where a Handle point C routine is called, which will be explained hereinafter with reference to Fig. 14 and 15.

Referring first to Fig. 14, the routine handle point C is initiated at step 114, where it is checked whether the latest slope was an ascent. If no, at step 116, it is checked whether point B+ is in front of, i.e. lies before, point C (seen from the truck). If yes, at step 118, the conventional cruise control is activated and sets the velocity to $v_{ref}$ from point B+ to the first possible point C. Then, at step 120, it is checked whether the present velocity is lower than the velocity in the corresponding position in the velocity C vector. If yes, at step 122, the conventional cruise control continues to control the vehicle with the velocity $v_{ref}$ a preset number of meters m and when the truck has passes the preset number of m, the check at step 120 is performed again. On the other hand, if the present velocity is higher than the velocity in the corresponding position in the velocity C vector, the algorithm proceeds to step 124 and the engine torque is set to the drag torque from point C to End of descent.

However, if, at step 116, it is determined that point B+ is not in front of point C, the algorithm proceeds to step 126, where it is checked whether the velocity at the present position in the velocity C vector is higher than the present velocity or if the velocity in the point C vector diminishes. If yes, the algorithm proceeds to step 128 and the engine toque is set to a predetermined value, in this embodiment 40 Nm, from End of descent to first possible point C. Thereafter, at step 130, it is checked whether the present velocity is lower than the velocity in the corresponding velocity C vector. If yes, at step 132, the engine torque is set to the predetermined torque, in this embodiment 40 Nm as mentioned above, for a distance of a preset number of meters m. Then, when the preset number of m has been passed, the algorithm returns to step 130. This will be repeated until the present velocity is higher than the velocity in the corresponding velocity C vector, then the algorithm proceeds to step 124 where the engine torque is set to the drag torque until End of descent.

On the other hand, if, in step 114, it is determined that the latest slope was an ascent, the algorithm proceeds to step 134, where it is determined whether the first possible point C is in front of End of ascent point, see Fig. 15. If yes, at step 136, the conventional cruise control is activated to control the truck with the velocity min(89, $v_{max}$) from Start of ascent point to End of ascent point. Then, at step 138, when truck has reached the End of ascent, the conventional cruise control controls the truck with $v_{ref}$ from the End of ascent to the first possible point C. Thereafter, at step 140, when the truck has reached the first possible point C, it is checked whether the present velocity is lower than velocity in corresponding position in the velocity C vector. If yes at step 140, it is checked at step 142 if the actual position and a preset number of meters m is behind, i.e. lies after, End of ascent (seen from the truck). If yes, at step 144, the conventional cruise control controls the truck with the velocity $v_{ref}$ during the preset number of m and when the truck has passed the preset distance, the algorithm returns to step 140. However, if no at step 142, i.e. it is determined that the actual position and a preset number of m is not behind, i.e. lies before, End of ascent (seen from the truck), the conventional cruise control controls the truck with the velocity min(89, $v_{max}$) at step 146 during the preset distance and the algorithm returns to step 140 when the preset distance has been passed. Then, the algorithm returns to step 140. This is repeated until the present velocity is higher than velocity in corresponding position in the velocity C vector, then the algorithm proceeds to step 124.

On the other hand, if no at step 134, i.e. it is determined that the first possible point C is in front of, i.e. lies before, End of ascent point, the conventional cruise control is activated at step 148 with the velocity min(89, $v_{max}$) from Start of ascent to first possible point C. Then, when the truck has reached first possible point C, the algorithm proceeds to step 140 and continues as described above.

When the handle point C routine is finished, the algorithm proceeds and subsequently, at step 92, when the truck has passed the descent, the algorithm returns to step 32, and the check whether there are any more ascents or descents along the route in front of the truck is resumed. If no at step 84, i.e. it was determined in step 84 that point B+ of the last descent is positioned behind or after (seen from the truck) the first possible point C, the algorithm proceeds directly to step 90.

On the other hand, if, at step 82, it was determined that the condition that a descent had been passed and a further descent is approaching not was satisfied, the algorithm proceeds to step 94, where it is checked whether a descent just has been passed and an ascent is approaching, see Fig. 12. The situation where a truck just has passed an ascent and approaches a descent is discussed above with reference to Fig. 5. If yes, at step 96, the regular drive operation routine is called, see above mentioned discussion with reference to Fig. 11. Thereafter, at step 98, when the truck has passed the ascent, the algorithm returns to step 32, and the check whether there are any more ascents or descents along the route in front of the truck is resumed.

However, if, at step 94, it was determined that that the condition that a descent just has been passed and an ascent is approaching not was satisfied, the algorithm proceeds to step 100, where it is checked whether the truck just has passed an ascent and approaches another ascent. The situation where a truck just has passed an ascent and approaches another ascent is discussed above with reference to Fig. 8. If yes, at step 102, the regular drive operation routine is called, see above mentioned discussion with reference to Fig. 11. Thereafter, at step 104, when the truck has passed point D, the engine torque is set to the maximum torque from point D to Start of ascent. Then, at step 106, when the truck has passed the ascent, the algorithm returns to step 32, and the check whether there are any more ascents or descents along the route in front of the truck is resumed.

If, at step 100, it was determined that that the condition that an ascent just has been passed and another ascent is approaching not was satisfied, the algorithm proceeds to step 108, where it is checked whether the truck just has passed an ascent and approaches a descent. The situation where a truck just has passed an ascent and approaches a descent is discussed above with reference to Fig. 6. If yes, at step 110, the Handle point C routine is called, see above mentioned discussion with reference to Fig. 14 and 14. Subsequently, at step 112, when the truck has passed End of descent, the algorithm returns to step 32, and the check whether there are any more ascents or descents along the route in front of the truck is resumed.

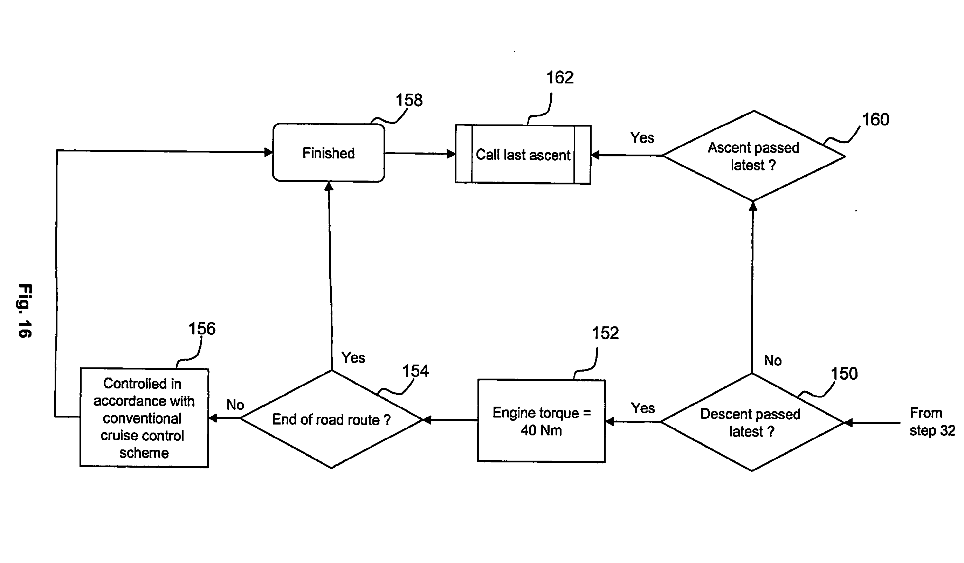

However, if no at step 32, the algorithm proceeds to step 150, see Fig. 16, where it is checked whether the latest slope was a descent. If yes at step 150, the engine torque is set, at step 152, to a predetermined torque, which in this embodiment is 40 Nm, from End of descent to point B+. Then, at step 154, it is checked whether the end of the route has been reached. If no, at step 156, the conventional cruise control is activated and control the truck until the route is finished at step 158. If, at step 154, it is determined that the end of the route has been reached, the algorithm proceeds directly to step 158.

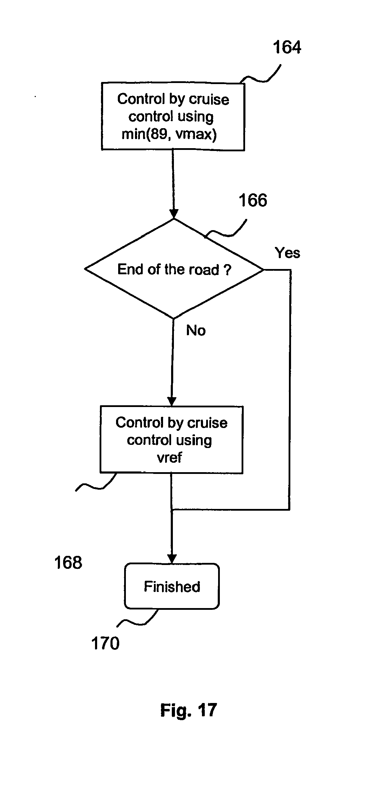

On the other hand, if no at step 150, the algorithm proceeds to step 160, where it is checked whether the last slope was an ascent. If yes, a last ascent routine is called at step 162, which will be described hereinafter with reference to Fig. 17. First, at step 164, the conventional cruise control is activated with the velocity min(89, $v_{max}$) from start of ascent to end of ascent. Then, at step 166, it is checked whether the end of the route has been reached and if no, the algorithm proceeds to step 168 where the conventional cruise control uses $v_{ref}$ from end of ascent to the end of the route has been reached. Then, at step 170, the sub-routine last ascent is completed. On the other hand, if, at step 166, it is determined that the end of the route has been reached, the algorithm proceeds directly to step 170, where the sub-routine last ascent is completed.

Although specific embodiments have been shown and described herein for purposes of illustration and exemplification, it is understood by those of ordinary skill in the art that the specific embodiments shown and described may be substituted for a wide variety of alternative and/or equivalent implementations without departing from the scope of the present invention as defined by the claims.

**EP 1 885 576 B1**

**Claims**

1. A method for controlling operation of a vehicle, **characterized by** the steps of identifying (26), for a route to be driven, a set of points associated with each ascent and descent along said route ahead of the vehicle having angle of inclination values such that the vehicle velocity cannot be maintained at maximum driving torque during uphill driving of the respective identified ascents and, the vehicle velocity increases with no driving torque applied at downhill driving of the respective identified descents, said route being pre-stored in a road map, wherein each of said points is associated with at least one vehicle operation criterion; calculating (27) the specific position of each of said points based on at least one of each of a set of vehicle parameters, vehicle operation parameters, and road route parameters of said road map; storing (27) said calculated positions before driving said route; and obtaining (28) present vehicle position in order to determine the vehicle position relative the road map during driving said route; selecting (28) a driving strategy instruction for the control of said vehicle for each distance between the positions of two consecutive points of each ascent and descent, based on said vehicle position, and controlling (29) at least one engine operating parameter as a function of said driving strategy instruction between each of said consecutive points in order to control the vehicle operation such that said at least one vehicle operation criterion associated with respective point of each of said points is fulfilled.

2. Method according to claim 1, wherein the step of obtaining (28) further comprises the step of determining present vehicle position by means of signals of a positioning system, such as a GPS system, received in a positioning system receiver (12), vehicle speed and route data of said road map.

3. Method according to claim 1 or 2, wherein said at least one vehicle operation parameter associated with each of said points of each ascent is set such that said vehicle reaches the ascent with a velocity enabling that the ascent is driven as quickly as possible according to the vehicle parameters of said vehicle.

4. Method according to claim 1 or 2, wherein said at least one vehicle operation parameter associated with each of said points of each ascent is set such that said vehicle reaches the ascent with a velocity enabling that the ascent is driven as fuel economically as possible according to the vehicle parameters of said vehicle.

5. Method according to claim 1, 2, 3 or 4, wherein said at least one vehicle operation parameter associated with each of said points of each descent is set such that said vehicle reaches its highest permitted velocity at the end of each respective descent substantially without utilizing driving or braking torque during the travel along the descent.

6. Method according to claim 1-5, wherein said set of points of each descent comprises: a start of descent point positioned such that the vehicle will maintain its velocity without throttle action or brake action; an end of descent point positioned such that the vehicle again will maintain Its velocity substantially without utilizing throttle action or brake action; a first descent point where the vehicle travels with a reference velocity $v_{ref}$ and positioned such that the vehicle will reach its maximum velocity $v_{max}$ at said end of descent point substantially without throttle action or brake action; a second descent point positioned such that the velocity of the vehicle again will be $v_{ref}$ if the velocity at said end of descent point was $v_{max}$ and substantially little driving and no braking torque was used; and a third descent point positioned such that the vehicle will reach said first descent point at $v_{ref}$ if substantially no driving torque is used starting at said third descent point and the same time as the velocity of said vehicle does not go below a lowest permitted velocity $v_{min}$.

7. Method according to claim 1-6, wherein said set of point of each ascent comprises: a start of ascent point positioned such that the vehicle will maintain velocity min $(x, v_{max})$ of a preset velocity x and $v_{max}$ at maximum torque; a first ascent point positioned such that, if the vehicle is driven at maximum torque starting from said first ascent point to said start of ascent point, the velocity of the vehicle will be the minimum velocity of said preset velocity and $v_{max}$ at said start of ascent point if the velocity at said first ascent point was $v_{ref}$; and an end of ascent point: positioned such that the vehicle again will be capable of maintaining a velocity of min$(x, v_{max})$ at said maximum torque.

8. Method according to any one of preceding claims, wherein said vehicle parameters include the weight of the vehicle, the engine power of the vehicle, and gear ratio of the vehicle; said vehicle operating parameters include the velocity of the vehicle, and said road route parameters include the gradient of the road.

9. System for controlling operation of a vehicle, **characterized by** processing means (20) arranged to calculate, for a route to be driven, the specific position for each of a set of points associated with each ascent and descent along said route ahead of the vehicle having angle of inclination values such that, the vehicle velocity cannot be maintained

13

at maximum driving torque during uphill driving of the respective ascents and, the vehicle velocity increases with no driving torque applied at downhill driving of the respective descents, said route being pre-stored in a road map stored in a storing means (22), wherein each of said points is associated with at least one vehicle operation criterion, based on at least one of each of a set of vehicle parameters, vehicle operation parameters, and road route parameters of said road map, said calculated positions being stored in said storing means (22) before driving said route; and means for obtaining the present vehicle position (12); said processing means (20) during driving said route being arranged to select a driving strategy instruction for the control of said vehicle for each distance between the positions of two consecutive points of each ascent and descent based on said vehicle position relative said road map, and to supply said driving strategy instruction for each of said distances to at least one vehicle controller (3, 5) that controls at least one engine operating parameter as a function thereof; wherein the vehicle operation according to said selected driving strategy between each of said consecutive points is controlled such that said at least one vehicle operation criterion associated with respective point of each of said points is fulfilled.

10. System according to claim 9, wherein said means for obtaining the present vehicle position (12) comprises a signal receiver, arranged to receive signals from a positioning system, wherein present vehicle position is determined by means of said signals, vehicle speed and route data of said road map

11. System according to claim 9 or 10, said at least one vehicle operation criterion associated with each of said points, said vehicle parameters, and said road route parameters are stored in said storing means (22).

12. System according to claim 9-11, wherein said at least one vehicle operation parameter associated with each said points of each descent is set such that said vehicle reaches its highest permitted velocity at the end of each respective descent substantially without utilizing driving or braking torque during the travel along the descent.

13. System according to any one of claim 9-12, wherein said set of points of each descent comprises: a start of descent point positioned such that the vehicle will maintain its velocity substantially without throttle action or brake action; an end of descent point positioned such that the vehicle again will maintain its velocity substantially without utilizing throttle action or brake action; a first descent point where the vehicle travels with a reference velocity $v_{ref}$ and positioned such that the vehicle will reach its maximum velocity $v_{max}$ at said end of descent point substantially without throttle action; a second descent point positioned such that the velocity of the vehicle again will be $v_{ref}$ if the velocity at said end of descent point was $v_{max}$ and substantially no driving or braking torque was used; and a third descent point positioned such that the vehicle will reach said first descent point at $v_{ref}$ when a predetermined driving torque is used starting at said third descent point and the same time as the velocity of said vehicle does not go below the lowest permitted velocity $v_{min}$.

14. System according to any one of claim 9-13, wherein said set of points of each ascent comprises: a start of ascent point positioned such that the vehicle will maintain minimum velocity of a preset velocity and $v_{max}$ at maximum torque; a first ascent point positioned such that, if the vehicle is driven at maximum torque starting from said first ascent point to said start of ascent point, the velocity of the vehicle will be minimum velocity of said preset velocity and $v_{max}$ at said start of ascent point if the velocity at said first ascent point was $v_{ref}$; and an end of ascent point: positioned such that the vehicle again will be capable of maintaining a velocity of $min(x, v_{max})$ at said maximum torque, wherein x is a predetermined velocity.

15. System according to any one of claims 9-12, wherein said vehicle parameters include the weight of the vehicle, the engine power of the vehicle, and gear ratio of the vehicle; said vehicle operating parameters include the velocity of the vehicle, and said road route parameters include the gradient of the road.

16. Computer program (24) for an electronic control unit (8) of a vehicle for controlling operation of the vehicle, **characterized in that** said program (24) comprises program instructions, which when run on the electronic control unit (8), causes the electronic control unit (8) to perform the steps of any one of claims 1-8.

17. Computer program product comprising computer readable medium (22) and a computer program (24) according to claim 16, wherein said computer program (24) is stored on said computer readable medium (22).

18. Electronic control unit (8) of a vehicle, **characterised in that** a storage means (22) of said control unit comprises a computer program (24) according to claim 16.

**EP 1 885 576 B1**

**Patentansprüche**

1. Verfahren zum Steuern eines Fahrzeugbetriebs, **gekennzeichnet durch** die folgenden Schritte:

   Identifizieren (26) einer Menge an Punkten für eine zu fahrende Strecke, die jeder Steigung und jedem Gefälle entlang der vorausliegenden Strecke des Fahrzeugs zugeordnet sind, mit derartigen Neigungswinkelwerten, dass die Fahrzeuggeschwindigkeit bei einem maximalen Antriebsmoment nicht aufrechterhalten werden kann während einer Bergauffahrt der jeweiligen, identifizierten Steigungen, und sich die Fahrzeuggeschwindigkeit erhöht ohne ein zugrundeliegendes Antriebsmoment bei einer Bergabfahrt der jeweiligen, identifizierten Gefälle, wobei die Strecke in einer Straßenkarte vorgespeichert ist und jeder der Punkte zumindest einem Fahrbetriebskriterium zugeordnet ist;
   Berechnen (27) der spezifischen Position von jedem der Punkte aufgrund von zumindest einem von jedem aus einer Menge an Fahrzeugparametern, Fahrbetriebsparametern und Straßenverlaufsparametern der Straßenkarte;
   Speichern (27) der berechneten Positionen vor dem Befahren der Strecke; und
   Erfassen (28) der gegenwärtigen Fahrzeugposition, um die Fahrzeugposition relativ zur Straßenkarte während dem Befahren der Strecke zu bestimmen;
   Auswählen (28) einer Fahrstrategieanweisung zum Steuern des Fahrzeugs bei jeder Distanz zwischen den Positionen zweier aufeinanderfolgender Punkte jeder Steigung und jedes Gefälles anhand der Fahrzeugposition, und
   Steuern (29) von zumindest einem Motorbetriebsparameter in Abhängigkeit der Fahrstrategieanweisung zwischen jedem der aufeinanderfolgenden Punkte, um den Fahrbetrieb derart zu kontrollieren, dass zumindest ein Fahrbetriebskriterium erfüllt ist, welches einem jeweiligen Punkt von jedem der Punkte zugeordnet ist.

2. Verfahren nach Anspruch 1, wobei der Schritt des Erfassens (28) weiterhin den Schritt umfasst:

   Bestimmen der gegenwärtigen Fahrzeugposition mittels Signale eines Positionierungssystems, wie zum Beispiel eines GPS-Systems, welche von dem Positionierungssystemempfänger (12) empfangen werden, der Fahrzeuggeschwindigkeit und der Streckendaten der Straßenkarte.

3. Verfahren nach Anspruch 1 oder 2, wobei zumindest ein Fahrbetriebsparameter, der jedem der Punkte jeder Steigung zugeordnet ist, derart bestimmt ist, dass das Fahrzeug die Steigung mit einer Geschwindigkeit erreicht, die es ermöglicht, die Steigung so schnell wie möglich gemäß den Fahrzeugparametern des Fahrzeugs zu befahren.

4. Verfahren nach Anspruch 1 oder 2, wobei zumindest ein Fahrbetriebsparameter, der jedem der Punkte jeder Steigung zugeordnet ist, derart bestimmt ist, dass das Fahrzeug die Steigung mit einer Geschwindigkeit erreicht, die es ermöglicht, die Steigung so kraftstoffökonomisch wie möglich gemäß den Fahrzeugparametern des Fahrzeugs zu befahren.

5. Verfahren nach einem der Ansprüche 1 bis 4, wobei zumindest ein Fahrbetriebsparameter, der jedem der Punkte jedes Gefälles zugeordnet ist, derart bestimmt ist, dass das Fahrzeug seine höchste, zulässige Geschwindigkeit am Ende jedes jeweiligen Gefälles erreicht im Wesentlichen ohne Verwendung des Antriebs oder des Bremsmoments während der Fahrt entlang des Gefälles.

6. Verfahren nach einem der Ansprüche 1 bis 5, wobei die Menge an Punkten an jedem Gefälle umfasst: einen Startpunkt des Gefälles, der derart positioniert ist, dass das Fahrzeug seine Geschwindigkeit ohne Drosselwirkung oder Bremswirkung aufrechterhalten wird; einen Endpunkt des Gefälles, der derart positioniert ist, dass das Fahrzeug seine Geschwindigkeit im Wesentlichen ohne Verwendung der Drosselwirkung oder Bremswirkung erneut beibehalten wird; einen ersten Punkt des Gefälles, bei dem das Fahrzeug mit einer Referenzgeschwindigkeit $v_{ref}$ fährt und er derart positioniert ist, dass das Fahrzeug seine maximale Geschwindigkeit $v_{max}$ am Endpunkt des Gefälles erreichen wird im Wesentlichen ohne Drosselwirkung oder Bremswirkung; einen zweiten Punkt des Gefälles, der derart positioniert ist, dass die Geschwindigkeit des Fahrzeugs erneut $v_{ref}$ sein wird dann, wenn die Geschwindigkeit an dem Endpunkt des Gefälles $v_{max}$ war und im Wesentlichen ein geringer Antrieb und kein Bremsmoment verwendet wurde; und einen dritten Punkt des Gefälles, der derart positioniert ist, dass das Fahrzeug den ersten Punkt des Gefälles mit $v_{ref}$ erreicht dann, wenn im Wesentlichen kein Antriebsmoment verwendet wird beginnend bei dem dritten Punkt des Gefälles und wenn gleichzeitig die Geschwindigkeit des Fahrzeugs eine niedrigste, zugelassene Geschwindigkeit $v_{min}$ nicht unterschreitet.

7. Verfahren nach einem der Ansprüche 1 bis 6, wobei die Menge an Punkten an jeder Steigung umfasst: einen Startpunkt der Steigung, der derart positioniert ist, dass das Fahrzeug eine Geschwindigkeit min (x, $v_{max}$) der gegenwärtigen Geschwindigkeit x und $v_{max}$ bei maximalem Moment aufrechterhalten wird; einen ersten Punkt der Steigung, der derart positioniert ist, dass dann, wenn das Fahrzeug bei maximalem Moment angetrieben wird beginnend bei dem ersten Punkt der Steigung bis zum Startpunkt der Steigung, die Geschwindigkeit des Fahrzeugs die minimale Geschwindigkeit der gegenwärtigen Geschwindigkeit und $v_{max}$ beim Startpunkt der Steigung sein wird dann, wenn die Geschwindigkeit beim ersten Punkt der Steigung $v_{ref}$ war; und einen Endpunkt der Steigung, der derart positioniert ist, dass das Fahrzeug erneut in der Lage sein wird, die Geschwindigkeit von min (x, $v_{max}$) bei einem maximalen Moment aufrechtzuerhalten.

8. Verfahren nach einem der vorangehenden Ansprüche, wobei die Fahrzeugparameter das Gewicht des Fahrzeugs, die Motorleistung des Fahrzeugs und die Getriebeübersetzung des Fahrzeugs umfassen, die Fahrbetriebsparameter die Geschwindigkeit des Fahrzeugs umfassen, und die Straßenverlaufsparameter den Gradienten der Straße umfassen.

9. System zum Steuern eines Fahrzeugbetriebs, **gekennzeichnet durch** Verarbeitungsmittel (20), die dazu eingerichtet sind, um eine spezifische Position für eine zu fahrende Strecke für jeden aus einer Menge an Punkten zu berechnen, die jeder Steigung und jedem Gefälle entlang der vorausgehenden Strecke des Fahrzeugs zugeordnet sind, mit derartigen Neigungswinkelwerten, dass die Fahrzeuggeschwindigkeit bei einem maximalen Antriebsmoment nicht aufrechterhalten werden kann während einer Bergauffahrt der jeweiligen Steigungen und sich die Fahrzeuggeschwindigkeit erhöht ohne ein zugrundeliegendes Antriebsmoment bei einer Bergabfahrt der jeweiligen Gefälle, wobei die Strecke in einer Straßenkarte vorgespeichert ist, welche in Speichermitteln (22) gespeichert ist, wobei jeder der Punkte zumindest einem Fahrbetriebskriterium zugeordnet ist aufgrund von zumindest einem von jedem aus einer Menge an Fahrzeugparametern, Fahrbetriebsparametern und Straßenverlaufsparametern der Straßenkarte, wobei die berechneten Positionen in Speichermitteln (22) vor dem Befahren der Strecke gespeichert werden; und Mittel zum Erfassen der gegenwärtigen Fahrzeugposition (12); wobei die Verarbeitungsmittel (20) während dem Befahren der Strecke geeignet sind, um eine Fahrstrategieanweisung auszuwählen zum Steuern des Fahrzeugs bei jeder Distanz zwischen den Positionen zweier aufeinanderfolgender Punkte jeder Steigung und jedes Gefälles aufgrund der Fahrzeugposition relativ zu der Straßenkarte und um die Fahrstrategieanweisung für jede der Distanzen zumindest einer Fahrzeugsteuerung (3,5) bereitzustellen, die zumindest einen Motorbetriebsparameter in Abhängigkeit davon steuert; wobei der Fahrbetrieb gemäß der gewählten Fahrstrategie zwischen jedem der aufeinanderfolgenden Punkte derart gesteuert ist, dass zumindest ein Fahrbetriebskriterium erfüllt ist, welches einem jeweiligen Punkt von jedem der Punkte zugeordnet ist.

10. System nach Anspruch 9, wobei die Mittel zum Erfassen der gegenwärtigen Fahrzeugposition (12) einen Signalempfänger umfassen, der dafür geeignet ist, um Signale von einem Positionierungssystem zu erhalten, wobei die gegenwärtige Fahrzeugposition mittels Signale, Fahrzeuggeschwindigkeit und Streckendaten der Straßenkarte bestimmt wird.

11. System nach Anspruch 9 oder 10, wobei zumindest ein Fahrbetriebskriterium, das jedem der Punkte zugeordnet ist, die Fahrzeugparameter und die Straßenverlaufsparameter in Speichermitteln (22) gespeichert sind.

12. System nach einem der Ansprüche 9 bis 11, wobei zumindest ein Fahrbetriebsparameter, der jedem der Punkte jedes Gefälles zugeordnet ist, derart bestimmt ist, dass das Fahrzeug seine höchste, zulässige Geschwindigkeit am Ende jedes jeweiligen Gefälles erreicht im Wesentlichen ohne die Verwendung des Antriebs oder Bremsmoments während der Fahrt entlang des Gefälles.

13. System nach einem der Ansprüche 9 bis 12, wobei die Menge an Punkten an jedem Gefälle umfasst: einen Startpunkt des Gefälles, der derart positioniert ist, dass das Fahrzeug seine Geschwindigkeit im Wesentlichen ohne Drosselwirkung oder Bremswirkung beibehalten wird; einen Endpunkt des Gefälles, der derart positioniert ist, dass das Fahrzeug seine Geschwindigkeit erneut beibehalten wird im Wesentlichen ohne Verwendung der Drosselwirkung oder Bremswirkung; einen ersten Punkt des Gefälles, bei dem das Fahrzeug mit einer Referenzgeschwindigkeit $v_{ref}$ fährt und er derart positioniert ist, dass das Fahrzeug seine maximale Geschwindigkeit $v_{max}$ an dem Endpunkt des Gefälles im Wesentlichen ohne Drosselwirkung erreicht; einen zweiten Punkt des Gefälles, der derart positioniert ist, dass die Geschwindigkeit des Fahrzeugs erneut $v_{ref}$ sein wird dann, wenn die Geschwindigkeit am Endpunkt des Gefälles $v_{max}$ war und im Wesentlichen kein Antriebs- oder Bremsmoment verwendet wurde; und einen dritten Punkt des Gefälles, der derart positioniert ist, dass das Fahrzeug den ersten Punkt des Gefälles mit $v_{ref}$ erreicht dann, wenn ein vorbestimmtes Antriebsmoment verwendet wird beginnend bei dem dritten Punkt des Gefälles und wenn gleichzeitig die Geschwindigkeit des Fahrzeugs die niedrigste, zugelassene Geschwindigkeit $v_{min}$ nicht unterschreitet.

14. System nach einem der Ansprüche 9 bis 13, wobei die Menge an Punkten an jeder Steigung umfasst: einen Startpunkt der Steigung, der derart positioniert ist, dass das Fahrzeug die minimale Geschwindigkeit der gegenwärtigen Geschwindigkeit und $v_{max}$ bei maximalem Moment aufrechterhalten wird; einen ersten Punkt der Steigung, der derart positioniert ist, dass dann, wenn das Fahrzeug bei maximalem Moment angetrieben wird beginnend bei dem ersten Punkt der Steigung bis zum Startpunkt der Steigung, die Geschwindigkeit des Fahrzeugs die minimale Geschwindigkeit der gegenwärtigen Geschwindigkeit und $v_{max}$ beim Startpunkt der Steigung sein wird dann, wenn die Geschwindigkeit bei dem ersten Punkt der Steigung $v_{ref}$ war; und einen Endpunkt der Steigung, der derart positioniert ist, dass das Fahrzeug erneut in der Lage sein wird, die Geschwindigkeit von min ($x$, $v_{max}$) bei maximalem Moment aufrechtzuhalten, wobei $x$ eine vorbestimmte Geschwindigkeit ist.

15. System nach einem der Ansprüche 9 bis 12, wobei die Fahrzeugparameter das Gewicht des Fahrzeugs, die Motorleistung des Fahrzeugs und die Getriebeübersetzung des Fahrzeugs umfassen, die Fahrbetriebsparameter die Geschwindigkeit des Fahrzeugs umfassen, und die Straßenverlaufsparameter den Gradienten der Straße umfassen.

16. Computerprogramm (24) für eine elektronische Steuereinheit (8) eines Fahrzeugs zum Steuern des Fahrzeugbetriebs, **dadurch gekennzeichnet, dass** das Programm (24) Programminstruktionen umfasst, die die elektronische Steuereinheit (8) veranlassen dann, wenn sie auf der elektronischen Steuereinheit (8) ausgeführt sind, die Schritte nach einem der Ansprüche 1 bis 8 auszuführen.

17. Computerprogrammprodukt, das ein computerlesbares Medium (22) und ein Computerprogramm (24) nach Anspruch 16 umfasst, wobei das Computerprogramm (24) auf dem computerlesbaren Medium (22) gespeichert wird.

18. Elektronische Steuereinheit (8) eines Fahrzeugs, **dadurch gekennzeichnet, dass** Speichermittel (22) der Steuereinheit ein Computerprogramm (24) nach Anspruch 16 umfassen.

**Revendications**

1. Procédé pour commander la marche d'un véhicule,
   **caractérisé par** les étapes consistant à identifier (26), pour un itinéraire à parcourir, un ensemble de points associés à chaque rampe et à chaque pente le long dudit itinéraire en avant du véhicule qui ont des valeurs d'angle d'inclinaison telles que la vitesse du véhicule ne peut pas être maintenue au couple moteur maximum pendant la montée des rampes identifiées respectives et que la vitesse du véhicule croît sans qu'un couple moteur soit appliqué dans la descente des pentes identifiées respectives, ledit itinéraire étant prémémorisé dans une carte routière, dans laquelle chacun desdits points est associé à au moins un critère de marche du véhicule ; à calculer (27) la position spécifique de chacun desdits points sur la base d'au moins un de chacun d'un ensemble de paramètres du véhicule, de paramètres de marche du véhicule, et de paramètres de l'itinéraire routier de ladite carte routière ; à mémoriser (27) lesdites positions calculées avant de parcourir ledit itinéraire ; et à obtenir (28) une position actuelle du véhicule afin de déterminer la position du véhicule sur la carte routière pendant le parcours dudit itinéraire ; à sélectionner (28) une instruction de stratégie de conduite pour la commande du véhicule pour chaque distance entre les positions de deux points consécutifs de chaque rampe et de chaque pente, sur la base de ladite position du véhicule, et à commander (29) au moins un paramètre de marche du moteur en fonction de ladite instruction de stratégie de conduite dans chaque intervalle entre chacun desdits points consécutifs afin de commander la marche du véhicule de telle sorte que ledit au moins un critère de marche du véhicule associé à un point respectif de chacun desdits points est respecté.

2. Procédé selon la revendication 1, dans lequel l'étape
   d'obtention (28) comprend en outre l'étape de détermination de la position actuelle du véhicule au moyen de signaux d'un système de positionnement, tel qu'un système GPS, qui sont reçus dans un récepteur de système de positionnement (12), de la vitesse du véhicule et de données d'itinéraire de ladite carte routière.

3. Procédé selon la revendication 1 ou 2, dans lequel ledit au moins un paramètre de marche du véhicule associé à chacun desdits points de chaque rampe est établi de telle sorte ledit véhicule atteint la rampe avec une vitesse qui permet que la rampe soit parcourue aussi rapidement que possible en fonction des paramètres de véhicule dudit véhicule.

**4.** Procédé selon la revendication 1 ou 2, dans lequel ledit au moins un paramètre de marche du véhicule associé à chacun desdits points de chaque rampe est établi de telle sorte que ledit véhicule atteint la rampe avec une vitesse qui permet que la rampe soit parcourue de manière aussi économe en carburant que possible en fonction des paramètres de véhicule dudit véhicule.

**5.** Procédé selon la revendication 1,2, 3 ou 4, dans lequel ledit au moins un paramètre de marche du véhicule associé à chacun desdits points de chaque pente est établi de telle sorte que ledit véhicule atteint sa plus haute vitesse autorisée à la fin de chaque pente respective pratiquement sans utiliser de couple moteur ni de freinage pendant le parcours le long de la pente.

**6.** Procédé selon la revendication 1-5, dans lequel ledit ensemble de points de chaque pente comprend : un point de début de pente positionné de telle sorte que le véhicule maintiendra sa vitesse sans action sur les gaz ni sur les freins ; et un point de fin de pente positionné de telle sorte que le véhicule maintiendra de nouveau sa vitesse pratiquement sans utiliser d'action sur les gaz ni d'action sur les freins ; un premier point de pente à l'endroit où le véhicule circule avec une vitesse de référence $V_{ref}$ et positionné de telle sorte que le véhicule atteindra sa vitesse maximum $V_{max}$ audit point de fin de pente pratiquement sans action sur les gaz ni d'action sur les freins ; un second point de pente positionné de telle sorte que la vitesse du véhicule sera de nouveau $V_{ref}$ si la vitesse audit point de fin de pente était $V_{max}$ et que pratiquement peu de couple moteur et aucun couple de freinage n'a été utilisé ; et un troisième point de pente positionné de telle sorte que le véhicule atteindra ledit premier point de pente à $V_{ref}$ si pratiquement aucun couple moteur n'est utilisé à partir dudit troisième point de pente, et en même temps que la vitesse dudit véhicule ne tombe pas au-dessous de la plus basse vitesse autorisée $V_{min}$

**7.** Procédé selon la revendication 1-6, dans lequel ledit ensemble de points de chaque rampe comprend : un point de début de rampe positionné de telle sorte que le véhicule maintiendra une vitesse min $(x, V_{max})$ d'une vitesse préétablie x et de $V_{max}$ au couple maximum ; un premier point de rampe positionné de telle sorte que, si le véhicule est conduit au couple maximum à partir dudit premier point de rampe et jusqu'audit point de début de rampe, la vitesse du véhicule sera la vitesse minimum de ladite vitesse préétablie et de $V_{max}$ audit point de début de rampe si la vitesse audit premier point de rampe était $V_{ref}$ ; et un point de fin de rampe : positionné de telle sorte que le véhicule sera de nouveau capable de maintenir une vitesse de min $(x, V_{max})$ audit couple maximum

**8.** Procédé selon une quelconque des revendications précédentes, dans lequel lesdits paramètres du véhicule comprennent le poids du véhicule, la puissance du moteur du véhicule, et le rapport de vitesse du véhicule ; lesdits paramètres de marche du véhicule comprennent la vitesse du véhicule et lesdits paramètres d'itinéraire routier comprennent le gradient de la route.

**9.** Système pour commander la marche d'un véhicule, **caractérisé par** des moyens de traitement (20) agencés pour calculer, pour un itinéraire à parcourir, la position spécifique pour chacun d'un ensemble de points associés à chaque rampe et à chaque pente le long dudit itinéraire en avant du véhicule ayant des valeurs d'angle d'inclinaison telles que la vitesse du véhicule ne peut pas être maintenue au couple moteur maximum pendant la montée des rampes respectives, et que la vitesse du véhicule croît sans qu'un couple moteur soit appliqué dans la descente des pentes respectives, ledit itinéraire étant prémémorisé dans une carte routière mémorisée dans un moyen de mémoire (22) dans lequel chacun desdits points est associé à au moins un critère de marche du véhicule, sur la base d'au moins un de chacun d'un ensemble de paramètres du véhicule, de paramètres de marche du véhicule et de paramètres d'itinéraire routier de ladite carte routière, lesdites positions calculées étant mémorisées dans ledit moyen de mémorisation (22) avant de parcourir ledit itinéraire ; et des moyens pour obtenir la position actuelle du véhicule (12) ; lesdits moyens de traitement (20), pendant le parcours dudit itinéraire étant agencés pour sélectionner une instruction de stratégie de conduite pour la commande du véhicule sur chaque distance entre les positions de deux points consécutifs de chaque rampe et de chaque pente sur la base de ladite position du véhicule sur ladite carte routière, et pour fournir ladite instruction de stratégie de conduite pour chacune desdites distance à au moins une unité de commande de véhicule (3, 5) qui commande au moins un paramètre de marche du moteur en fonction de ce paramètre ; dans lequel la marche du véhicule conforme à ladite stratégie de conduite entre chacun desdits points consécutifs est commandée de telle sorte que ledit au moins un critère de marche du véhicule associé à un point respectif de chacun desdits points est respecté.

**10.** Système selon la revendication 9, dans lequel ledit moyen pour obtenir la position actuelle du véhicule (12) comprend un récepteur de signaux, agencé pour recevoir des signaux en provenance d'un système de positionnement, dans lequel la position actuelle du véhicule est déterminée au moyen desdits signaux, de la vitesse du véhicule et des données d'itinéraire de ladite carte routière.

**11.** Système selon la revendication 9 ou 10, dans lequel ledit au moins un critère de marche du véhicule associé à chacun desdits points, lesdits paramètres de véhicule et lesdits paramètres d'itinéraire routier sont mémorisée dans ledit moyen de mémorisation (22).

**12.** Système selon la revendication 9-11, dans lequel ledit au moins un paramètre de marche du véhicule associé à chacun desdits points de chaque pente est établi de telle sorte que ledit véhicule atteint sa vitesse maximale autorisée à la fin de chaque pente respective pratiquement sans utiliser de couple moteur ni de freinage pendant le parcours le long de la pente.

**13.** Système selon une quelconque des revendications 9-12, dans lequel ledit ensemble de points de chaque pente comprend : un point de début de pente positionné de telle sorte que le véhicule maintiendra sa vitesse pratiquement sans action sur les gaz ni sur les freins ; un point de fin de pente positionné de telle sorte que, de nouveau, le véhicule maintiendra sa vitesse pratiquement sans utiliser d'action sur les gaz ni d'action sur les freins ; un premier point de pente où le véhicule circule à une vitesse de référence $V_{ref}$ et positionné de telle sorte que le véhicule atteindra sa vitesse maximum $V_{max}$ au point de fin de pente pratiquement sans action sur les gaz ; un deuxième point de pente positionné de telle sorte que la vitesse du véhicule sera de nouveau $V_{ref}$ si la vitesse audit point de fin de pente était $V_{max}$ et si sensiblement aucun couple moteur ni de freinage n'a été utilisé ; et un troisième point de pente positionné de telle sorte que le véhicule atteindra ledit premier point de pente à $V_{ref}$ lorsqu'un couple moteur prédéterminé est utilisé à partir dudit troisième point de pente et en même temps que la vitesse dudit véhicule ne tombe pas au-dessous de la plus basse vitesse autorisée $V_{min}$.

**14.** Système selon une quelconque des revendications 9 à 13, dans lequel ledit ensemble de points de chaque rampe comprend : un point de début de rampe positionné de telle sorte que le véhicule maintiendra la vitesse minimum d'une de vitesse préétablie et de $V_{max}$ au couple maximum ; un premier point de rampe positionné de telle sorte que, si le véhicule est conduit au couple maximum à partir dudit premier point de rampe jusqu'audit point de début de rampe, la vitesse du véhicule sera la vitesse minimum de ladite de vitesse préétablie et de $V_{max}$ audit point de début de rampe si la vitesse audit premier point de rampe était $V_{ref}$ et un point de fin de rampe : positionné de telle sorte que le véhicule sera de nouveau capable de maintenir une vitesse de min(x, $V_{max}$) audit couple maximum, où x est une vitesse prédéterminée.

**15.** Système selon une quelconque des revendications 9-12 dans lequel lesdits paramètres de véhicule comprennent le poids du véhicule, la puissance du moteur du véhicule et le rapport de vitesse du véhicule ; lesdits paramètres de marche du véhicule comprennent la vitesse du véhicule, et lesdits paramètres d'itinéraire routier comprennent le gradient de la route.

**16.** Programme d'ordinateur (24) pour unité de commande électronique (8) d'un véhicule destiné à commander le marche d'un véhicule, **caractérisé en ce que** ledit programme (24) comprend des instructions de programme qui, lorsqu'elles sont exécutées sur l'unité de commande électronique (8), amènent l'unité de commande électronique (8) à exécuter les étapes de l'une quelconque des revendications 1-8.

**17.** Produit programme d'ordinateur comprenant un support lisible par ordinateur (22) et un programme d'ordinateur (24) selon la revendication 16, dans lequel ledit programme d'ordinateur (24) est mémorisé sur ledit milieu lisible par ordinateur (22).

**18.** Unité de commande électronique (8) d'un véhicule, **caractérisée en ce qu'**un moyen de mémorisation (22) de ladite unité de commande comprend un programme d'ordinateur (24) selon la revendication 16.

**Fig. 1**

Identifying vehicle
start and end positions

25

Identifying a set of points of
each steeper ascent and
descent

26

Calculating and storing
the specific position of each
point and driving strategies
between consecutive points

27

Monitoring vehicle position
and selecting at least one
driving strategy for each
distance between
consecutive points

28

Controlling at least one
engine operating
parameter as a function
of the driving strategy

29

**Fig.2**

**Fig. 3**

Fig. 4

EP 1 885 576 B1

Fig. 5

**Fig. 6**

Fig. 7

Elevation

Engine torque = 40 Nm

Cruise control using vref

Engine torque = drag torque

End of descent

Point B

Point C

End of descent

Fig. 8

40

Control by cruise
control using vref

44

Control by cruise
control using vref

42

Present vel. <
vel. at same pos. in
vel. C vector ?

Yes

No

46

Engine torque =
drag torque

**Fig. 9**

EP 1 885 576 B1

**Fig. 10**

29

**Fig. 11**

**Fig. 12**

From step 34

82 — Just passed descent, approaching descent

No → 94
Yes ↓

84 — Point B+ < first possible point C ?

No →
Yes ↓

86 — Engine torque = 40 Nm

88 — Point B in front of point C

90 — Call handle point C

92 — Descent passed

Go to step 32

94 — Just passed descent, approaching ascent

No → Go to step 100
Yes ↓

96 — Call regular drive operation

98 — Acsent passed

Go to step 32

**Fig. 13**

Fig. 14

**Fig. 15**

From
step 32

*150* Descent passed latest ?

No → *160* Ascent passed latest ?

Yes → *162* Call last ascent

Yes (from 150) → *152* Engine torque = 40 Nm

*154* End of road route ?

Yes → *158* Finished

No → *156* Controlled in accordance with conventional cruise control scheme

**Fig. 16**

164

```
Control by cruise
control using
min(89, vmax)
```

166

End of the road ?

Yes

No

```
Control by cruise
control using
vref
```

168

```
Finished
```

170

**Fig. 17**

**EP 1 885 576 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040068359 A